(19) 

Europäisches Patentamt

European Patent Office

Office européen des brevets

(11) **EP 4 572 489 A1**

(12) **EUROPEAN PATENT APPLICATION**
published in accordance with Art. 153(4) EPC

(43) Date of publication:
**18.06.2025 Bulletin 2025/25**

(21) Application number: **23853109.9**

(22) Date of filing: **10.08.2023**

(51) International Patent Classification (IPC):
*H04W 72/12* (2023.01)     *H04W 72/23* (2023.01)
*H04W 48/08* (2009.01)     *H04L 1/08* (2006.01)
*H04W 72/04* (2023.01)

(52) Cooperative Patent Classification (CPC):
**H04L 1/08; H04W 48/08; H04W 72/04;
H04W 72/12; H04W 72/23**

(86) International application number:
**PCT/KR2023/095041**

(87) International publication number:
**WO 2024/035244 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022  KR 20220100579
11.08.2022  KR 20220100596
24.08.2022  US 202263400716 P**

(71) Applicant: **LG Electronics Inc.
Yeongdeungpo-gu
Seoul 07336 (KR)**

(72) Inventors:
• **LEE, Sunghoon**
  **Seoul 06772 (KR)**
• **LEE, Youngdae**
  **Seoul 06772 (KR)**
• **KIM, Jaehyung**
  **Seoul 06772 (KR)**
• **YANG, Suckchel**
  **Seoul 06772 (KR)**

(74) Representative: **Plasseraud IP
104 Rue de Richelieu
CS92104
75080 Paris Cedex 02 (FR)**

(54) **SIGNAL TRANSMISSION AND RECEPTION METHOD FOR WIRELESS COMMUNICATION AND APPARATUS THEREFOR**

(57) **Abstract**: A method by which a UE receives a signal in a wireless communication system, according to an embodiment, comprises: receiving downlink control information (DCI) via a physical downlink control channel (PDCCH); and on the basis of the DCI, receiving a repeated physical downlink shared channel (PDSCH) in a time domain, wherein on the basis that the PDSCH scheduled by the DCI exceeds a PDSCH bandwidth supported by the UE, the UE may alternately receive different portions of the PDSCH in respective repetitions of the PDSCH.

**FIG. 22**

Receive DCI through PDCCH — C05

Receive repeated PDSCH based on DCI — C10

Description

## TECHNICAL FIELD

The present disclosure relates to wireless communication, and more particularly, to a method of transmitting or receiving an uplink/downlink signal in a wireless communication system and apparatus therefor.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## DISCLOSURE

## Technical Problem

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

## Technical Solution

According to an aspect, a method of receiving a signal by a user equipment (UE) in a wireless communication system includes receiving downlink control information (DCI) through a physical downlink control channel (PDCCH), and receiving a physical downlink shared channel (PDSCH) that is repeated in a time domain based on the DCI, wherein, based on the PDSCH scheduled by the DCI exceeding a PDSCH bandwidth supported by the UE, the UE alternately receives different portions of the PDSCH for each repetition of the PDSCH.

From among a first type reduced capability (RedCap) UE supporting the same size bandwidth for the PDCCH and the PDSCH, and a second type RedCap UE supporting different size bandwidths, the UE may be the second type RedCap UE.

The UE may receive the PDSCH by changing a location of a baseband (BB) for each repetition of the PDSCH.

For each repetition of the PDSCH, a radio frequency (RF) band may be maintained the same.

The DCI may include information about a number of repetitions of the PDSCH.

The DCI may be provided for each repetition of the PDSCH, and information regarding a number of repetitions of the PDSCH may be related to a number of remaining repetitions.

The PDSCH may include a first system information block (SIB).

A PDSCH bandwidth of the UE that can be received for each repetition of the PDSCH, may be 5 MHz or less.

The PDCCH carrying the DCI may be repeated multiple times in the time domain.

According to another aspect, a computer-readable recording medium having recorded thereon commands for performing the method described above may be provided.

According to another aspect, a user equipment (UE) for performing the method described above may be provided.

According to another aspect, a device for controlling the UE for performing the method described above may be provided.

According to another aspect, a method of transmitting a signal by a base station (BS) in a wireless communication system includes transmitting downlink control information (DCI) through a physical downlink control channel (PDCCH), and transmitting a physical downlink shared channel (PDSCH) to a user equipment (UE) based on the DCI, wherein the BS repeatedly transmits the PDSCH in a time domain based on that the UE receiving the PDSCH includes a reduced capability (RedCap) UE supporting different size bandwidths for the PDCCH and the PDSCH and that the PDSCH scheduled by the DCI exceeds a PDSCH bandwidth supported by the RedCap UE.

According to another aspect, a base station (BS) for performing the method described above may be provided.

# EP 4 572 489 A1

## ADVANTAGEOUS EFFECTS

According to an embodiment of the present disclosure, transmission and reception of a signal in a wireless communication system may be performed more accurately and efficiently.

The present disclosure is not limited to the technical effects described above, and other technical effects may be inferred from the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates a random access procedure.

FIG. 5 illustrates an example of physical channel mapping.

FIG. 6 illustrates an example of a repeatedly transmitted physical downlink shared channel (PDSCH).

FIG. 7 illustrates an example of repeated transmission of a PDSCH in two consecutive slots within one frame.

FIG. 8 illustrates an example of repeated transmission in consecutive even frames.

FIG. 9 is a diagram for explaining baseband processing related to repeated reception of a PDSCH by a UE.

FIG. 10 is a diagram for explaining repeated reception when one PDCCH schedules one PDSCH.

FIGS. 11 and 12 show an example of an operation sequence in which a BS repeatedly transmits and receives a PDSCH such that a RedCap UE may receive a PDSCH shared with an existing UE with higher performance.

FIG. 13 illustrates an example of a repeatedly transmitted PDCCH and PDSCH.

FIG. 14 illustrates an example of repeated transmission in consecutive clots in a frame.

FIG. 15 illustrates an example of repeated transmission in consecutive frames.

FIG. 16 is a diagram for explaining mapping of a reverse order of a repeatedly transmitted PDCCH and PDSCH.

FIG. 17 is a diagram for explaining mapping shifting of a repeatedly transmitted PDCCH and PDSCH.

FIG. 18 is a diagram for explaining repeated reception through RF retuning.

FIG. 19 illustrates an example of PRB mapping.

FIGS. 20 and 21 show an example of an operation sequence in which a BS repeatedly transmits and receives a PDCCH and a PDSCH such that a RedCap UE may receive a PDCCH and a PDSCH shared with an existing UE with higher performance.

FIG. 22 is a diagram for explaining an operation of a UE according to an embodiment.

FIG. 23 is a diagram for explaining an operation of a BS according to an embodiment.

FIGS. 24 and 25 illustrate a communication system 1 and wireless devices applied to the present disclosure.

3

FIG. 26 illustrates discontinuous reception (DRX) operation applicable to the present disclosure.

## MODE FOR INVENTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto. LTE refers to technologies after 3GPP TS 36.xxx Release 8. Specifically, LTE technologies after 3GPP TS 36.xxx Release 10 are referred to as LTE-A, and LTE technologies after 3GPP TS 36.xxx Release 13 are referred to as LTE-A pro. 3GPP NR refers to technologies after TS 38.xxx Release 15. LTE/NR may be referred to as 3GPP systems. In this document, "xxx" represents the detail number of a specification. LTE/NR may be collectively referred to as 3GPP systems.

Details of the background, terminology, abbreviations, etc. used herein may be found in documents published before the present disclosure. For example, the present disclosure may be supported by the following documents:

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

Technical terms used in this document

- UE : User Equipment
- URLLC : Ultra-Reliable Low-Latency Communication
- eMBB : enhanced Mobile Broadband
- SSB : Synchronisation Signal Block
- FR1 : Frequency Range 1. This refers to a frequency range less than or equal to 6 GHz (e.g., 450 MHz to 6000 MHz).
- FR2 : Frequency Range 2. This refers to a millimeter wave (mmWave) range equal to or greater than 24GHz (e.g., 24250 MHz to 52600 MHz).
- BW : Bandwidth
- BWP : Bandwidth Part
- RNTI : Radio Network Temporary Identifier
- PDSCH : Physical Downlink Shared Channel
- PUSCH : Physical Uplink Shared Channel
- PDCCH : Physical Downlink Control Channel
- RB : Resource Block
- RedCap: Reduced Capability
- MO : Monitoring Occasion

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, proposals and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, proposals and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

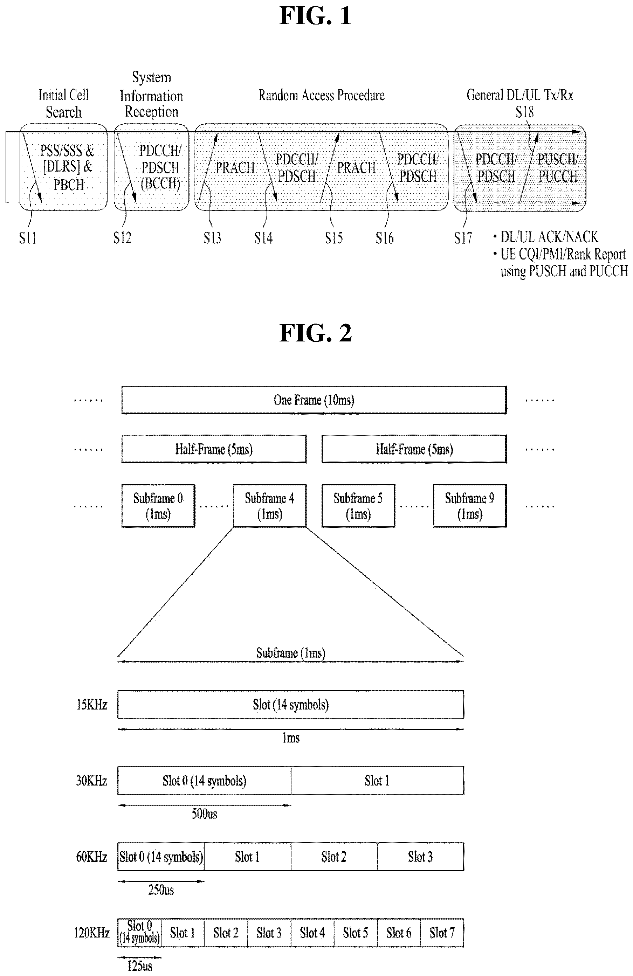

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

The SSB is composed of four consecutive OFDM symbols, each carrying the PSS, the PBCH, the SSS/PBCH, or the PBCH. Each of the PSS and the SSS includes one OFDM symbol by 127 subcarriers, and the PBCH includes three OFDM symbols by 576 subcarriers. The PBCH is encoded/decoded based on Polar codes, and modulation/demodulation is performed thereon according to quadrature phase shift keying (QPSK). The PBCH in the OFDM symbol consists of data resource elements (REs) to which a complex modulation value of the PBCH is mapped, and demodulation reference signal (DMRS) REs to which a DMRS for the PBCH is mapped. Three DMRS REs are configured for each RB in the OFDM symbol, and three data REs configured between DMRS REs.

The PSS may be used in detecting a cell ID within a cell ID group, and the SSS may be used in detecting a cell ID group. The PBCH may be used in detecting an SSB (time) index and a half-frame. There are 336 cell ID groups, and each cell ID group includes three cell IDs. Thus, there are a total of 1008 cell IDs.

SSBs are periodically transmitted with an SSB periodicity. A default SSB periodicity assumed by the UE in initial cell search is defined as 20 ms. After cell access, the SSB periodicity may be set to one of {5 ms, 10 ms, 20 ms, 40 ms, 80 ms, and 160 ms} by the network (e.g., BS). An SSB burst set may be configured at the beginning of the SSB periodicity. The SSB burst set may be set to a time window of 5 ms (i.e., half-frame), and the SSB may be repeatedly transmitted up to L times within the SS burst set. The maximum number of SSB transmissions L may be given depending carrier frequency bands as follows. One slot includes up to two SSBs.

- For frequency range up to 3 GHz, L = 4
- For frequency range from 3GHz to 6 GHz, L = 8
- For frequency range from 6 GHz to 52.6 GHz, L = 64

The time-domain positions of candidate SSBs in the SS burst set may be defined depending on subcarrier spacings. The time-domain positions of the candidate SSBs are indexed from (SSB indices) 0 to L-1 in temporal order within the SSB burst set (i.e., half-frame).

Multiple SSBs may be transmitted within the frequency span of a carrier. Each SSB may not need to have a unique physical layer cell identifier, but different SSBs may have different physical layer cell identifiers.

The UE may acquire DL synchronization by detecting the SSB. The UE may identify the structure of the SSB burst set based on the detected SSB (time) index, and thus the UE may detect a symbol/slot/half-frame boundary. A frame/half-frame number to which the detected SSB belongs may be identified based on system frame number (SFN) information and half-frame indication information.

Specifically, the UE may obtain a 10-bit SFN for a frame to which a PBCH belongs from the PBCH. Then, the UE may obtain 1-bit half-frame indication information. For example, when the UE detects the PBCH in which the half-frame indication bit is set to 0, the UE may determine that an SSB to which the PBCH belongs is included in the first half-frame of the frame. When the UE detects the PBCH in which the half-frame indication bit is set to 1, the UE may determine that an SSB to which the PBCH belongs is included in the second half-frame of the frame. Finally, the UE may obtain the SSB index of the SSB to which the PBCH belongs based on a DMRS sequence and a PBCH payload carried by the PBCH.

After initial cell search, the UE may acquire more specific system information by receiving a physical downlink control channel (PDCCH) and receiving a physical downlink shared channel (PDSCH) based on information of the PDCCH in step S102.

System information (SI) is divided into a master information block (MIB) and a plurality of system information blocks (SIBs). The SI except for the MIB may be referred to as remaining minimum system information (RMSI). Details thereof will be described in the following.

- The MIB includes information/parameters for monitoring a PDCCH scheduling a PDSCH carrying SIB1 (System-InformationBlock1), and the MIB is transmitted by the BS over the PBCH of an SSB. For example, the UE may check based on the MIB whether there is a CORESET for a Type0-PDCCH common search space. The Type0-PDCCH common search space is a kind of PDCCH search space, which is used to transmit a PDCCH scheduling an SI message. If the Type0-PDCCH common search space exists, the UE may determine (1) a plurality of contiguous RBs and one or more consecutive symbols included in the CORESET and (ii) a PDCCH occasion (e.g., a time-domain location for PDCCH reception, based on information (e.g., pdcch-ConfigSIB1) in the MIB. If the Type0-PDCCH common search space does not exist, pdcch-ConfigSIB1 provides information on a frequency location at which the SSB/SIB1 exists and information on a frequency range where there are no SSB/SIB1.
- SIB1 includes information related to availability and scheduling (e.g., transmission periodicity, SI-window size, etc.) of the remaining SIBs (hereinafter referred to as SIBx where x is an integer more than or equal to 2). For example, SIB1 may indicate whether SIBx is periodically broadcast or provided at the request of the UE in an on-demand manner. When SIBx is provided in an on-demand manner, SIB1 may include information necessary for the UE to send an SI request. SIB1 is transmitted over a PDSCH, and a PDCCH scheduling SIB1 is transmitted in the Type0-PDCCH common search space. That is, SIB1 is transmitted over the PDSCH indicated by the PDCCH.
- SIBx is included in the SI message and transmitted on the PDSCH. Each SI message is transmitted within a periodically occurring time window (i.e., SI-window).

The UE may perform a random access procedure (e.g., 4-step RA procedure) to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

Hereinafter, a 2-step random access procedure will be described in brief. In the 2-step random access procedure, S103/S105 may be performed in one step (where the UE performs transmission) (message A), and S104/S106 may be performed in one step (where the BS performs transmission) (message B). Message A (MsgA) may include a preamble and a payload (PUSCH payload), and the preamble and payload may be multiplexed based on time division multiplexing (TDM). In response to MsgA, message B (MsgB) may be transmitted for contention resolution, fallback indication(s), and/or backoff indication. The 2-step random access procedure may be subdivided into a contention-based random access (CBRA) procedure and a contention-free random access (CFRA) procedure. In the CFRA procedure, the BS may provide the UE with information on a preamble that the UE needs to transmit in MsgA and information on PUSCH allocation before the UE transmits MsgA.

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The MR system may support signal transmission/reception in unlicensed bands. According to regional regulations for unlicensed bands, a communication node in an unlicensed band needs to determine whether a channel is used by other communication node(s) before transmitting a signal. Specifically, the communication node may perform carrier sensing (CS) before transmitting the signal so as to check whether the other communication node(s) perform signal transmission. When it is determined that the other communication node(s) perform no signal transmission, it is said that clear channel assessment (CCA) is confirmed. When a CCA threshold is predefined or configured by higher layer signaling (e.g., RRC signaling), the communication node may determine that the channel is busy if the detected channel energy is higher than the CCA threshold. Otherwise, the communication node may determine that the channel is idle. When it is determined that the channel is idle, the communication node may start the signal transmission in a UCell. The sires of processes described above may be referred to as Listen-Before-Talk (LBT) or a channel access procedure (CAP). The LBT and CAP may be interchangeably used in this document.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

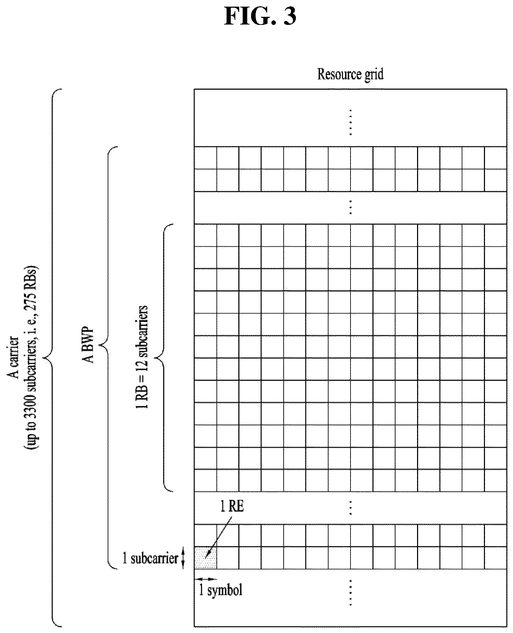

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

Bandwidth part (BWP)

The NR system may support up to 400 MHz for each carrier. The network may instruct the UE to operate only in a partial bandwidth rather than the whole bandwidth of such a wideband carrier. The partial bandwidth is referred to as a BWP. The BWP refers to a subset of contiguous common RBs defined for a numerology in the BWP of a carrier in the frequency domain, and one numerology (e.g., SCS, CP length, slot/mini-slot duration, etc.) may be configured.

Activation/deactivation of a DL/UL BWP or BWP switching may be performed according to network signaling and/or timers (e.g., L1 signaling corresponding to a physical layer control signal, a MAC control element corresponding to a MAC layer control signal, RRC signaling, etc.). While performing initial access or before setting up an RRC connection, the UE may not receive any DL/UL BWP configurations. A DL/UL BWP that the UE assumes in this situation is referred to as an initial active DL/UL BWP.

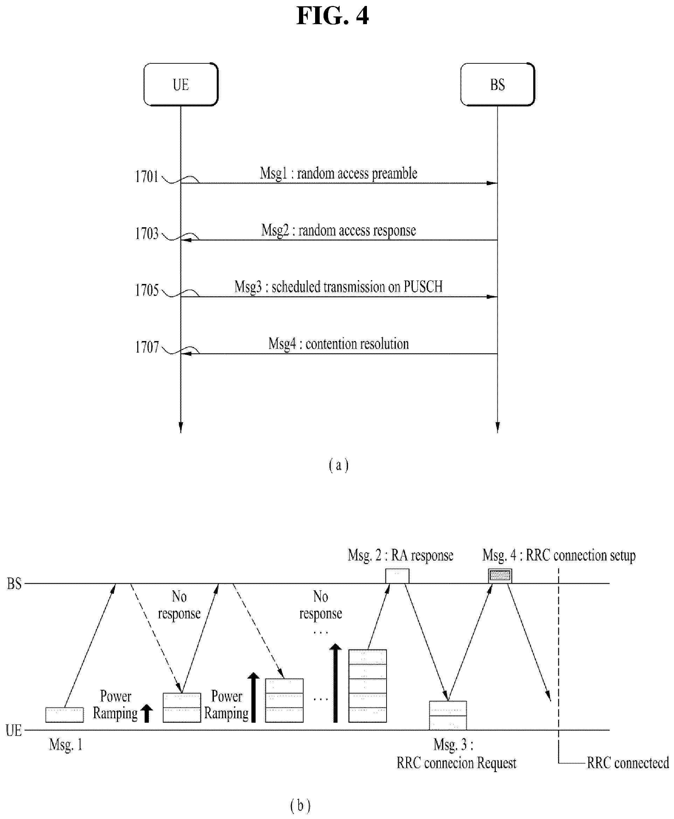

FIG. 4 illustrates an exemplary normal random access procedure. Specifically, FIG. 4 shows a contention-based random access procedure of the UE, which is performed in four steps.

First, the UE may transmit message 1 (Msg1) including a random access preamble on a PRACH (see 1701 of FIG. 4(a)).

Random access preamble sequences with different lengths may be supported. A long sequence length of 839 may be applied to SCSs of 1.25 and 5 kHz, and a short sequence length of 139 may be applied to SCSs of 15, 30, 60, and 120 kHz.

Multiple preamble formats may be defined by one or more RACH OFDM symbols and different CPs (and/or guard times). A RACH configuration for a cell may be included in SI about the cell and provided to the UE. The RACH configuration may include information on the SCS of the PRACH, available preambles, preamble formats, and so on. The RACH configuration may include information about association between SSBs and RACH (time-frequency) resources. The UE transmits a random access preamble on a RACH time-frequency resource associated with a detected or selected SSB.

The threshold of an SSB for RACH resource association may be configured by the network, and a RACH preamble may be transmitted or retransmitted based on an SSB where reference signal received power (RSRP), which is measured based on the SSB, satisfies the threshold. For example, the UE may select one SSB from among SSBs that satisfy the threshold and transmit or retransmit the RACH preamble based on a RACH resource associated with the selected SSB.

Upon receiving the random access preamble from the UE, the BS may transmit message 2 (Msg2) corresponding to a random access response (RAR) message to the UE (see 1703 of FIG. 4(a)). A PDCCH scheduling a PDSCH carrying the RAR may be CRC masked with a random access (RA) radio network temporary identifier (RNTI) (RA-RNTI) and then transmitted. Upon detecting the PDCCH masked by the RA-RNTI, the UE may obtain the RAR from the PDSCH scheduled by DCI carried by the PDCCH. The UE may check whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmit power for retransmitting the preamble based on the most recent path loss and power ramping counter.

The RAR information transmitted on the PDSCH may include timing advance (TA) information for UL synchronization, an initial UL grant, and a temporary cell-RNTI (C-RNTI). The TA information may be used to control a UL signal transmission timing. The UE may transmit a UL signal over a UL shared channel as message 3 (Msg3) of the random access procedure based on the RAR information (see 1705 of FIG. 4(a)). Msg3 may include an RRC connection request and a UE identifier. In response to Msg3, the network may transmit message 4 (Msg4), which may be treated as a contention resolution message on DL (see 1707 of FIG. 4(a)). Upon receiving Msg4, the UE may enter the RRC_CONNECTED state.

On the other hand, a contention-free random access procedure may be performed when the UE is handed over to another cell or BS or when it is requested by the BS. In the contention-free random access procedure, a preamble to be used by the UE (hereinafter referred to as a dedicated random access preamble) is allocated by the BS. Information on the dedicated random access preamble may be included in an RRC message (e.g., handover command) or provided to the UE through a PDCCH order. When the random access procedure is initiated, the UE may transmit the dedicated random access preamble to the BS. When the UE receives an RAR from the BS, the random access procedure is completed.

As described above, a UL grant in the RAR may schedule PUSCH transmission to the UE. A PUSCH carrying initial UL transmission based on the UL grant in the RAR is referred to as an Msg3 PUSCH. The content of an RAR UL grant may start at the MSB and end at the LSB, and the content may be given as shown in Table 3.

[Table 3]

| RAR UL grant field | Number of bits |
|---|---|
| Frequency hopping flag | 1 |
| Msg3 PUSCH frequency resource allocation | 12 |
| Msg3 PUCH time resource allocation | 4 |
| Modulation and coding scheme (MCS) | 4 |
| Transmit power control (TPC) for Msg3 PUSCH | 3 |
| CSI request | 1 |

In a contention-free random access (CFRA) procedure, the CSI request field in the RAR UL grant indicates whether the terminal includes aperiodic CSI reporting in the corresponding PUSCH transmission. a subcarrier spacing for Msg3 PUSCH transmission is provided by the RRC parameter. The terminal may transmit PRACH and Msg3 PUSCH on the same uplink carrier in the same service providing cell. A UL BWP for Msg3 PUSCH transmission is indicated by SystemInformationBlock1 (SIB1).

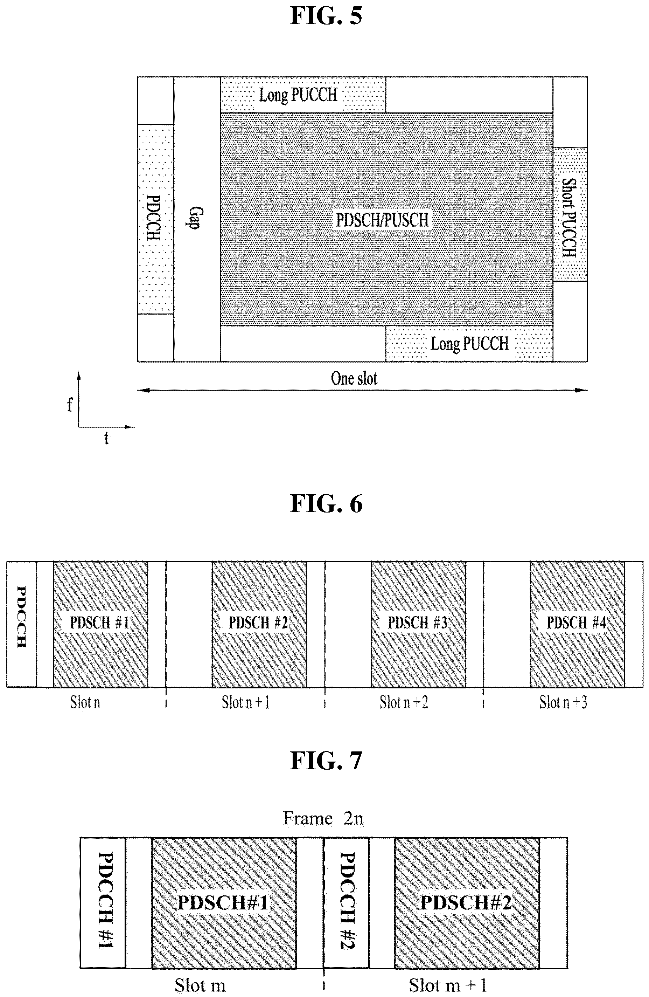

FIG. 5 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g.,

an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

**[0068]** * An occasion (e.g., time/frequency resources) in which the UE is to monitor PDCCH candidates is defined as a PDCCH (monitoring) occasion. One or more PDCCH (monitoring) occasions may be configured in a slot.
Table 4 shows the characteristics of each SS.

[Table 4]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 5 shows DCI formats transmitted on the PDCCH.

[Table 5]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

**Reduced Capability (RedCap) device**

In the Rel-17 NR system, research on reduced capability (RedCap) devices is conducted. A RedCap UE may be configured with higher requirement than the existing low power wide area (LPWA) (i.e., LTE-M/NB IOT) UE, and may be configured with lower requirement than a URLLC/eMBB UE. The RedCap UE may support a BW of 20 MHz and 100 MHz in FR1 and FR2 respectively, for which a separate initial BWP dedicated to the RedCap may be configured.

The Rel-18 RedCap study (R18-NR_redcap_enh) requires further complexity reduction to expand a RedCap use case market with relatively low cost, low energy consumption, and low data rate requirement. The Rel-18 RedCap needs to support a lower-level device between the LPWA UE and the Rel-17 RedCap UE, and to this end, a target peak data rate of the Rel-18 RedCap is configured to 10 Mbps. To this end, it is assumed that the Rel-18 RedCap UE may support a BW up to 5 MHz, which is smaller than a BW of 20 MHz in FR1 of the existing Rel-17 RedCap UE and may support a SCS of 15 kHz or 30 kHz. It is assumed that the Rel-18 RedCap UE does not support FR2.

The following shows options for channels with a BW limited to a maximum of 5 MHz.

- Option BW1: BW of 5 MHz for UL and DL in both radio frequency (RF) and baseband (BB).
- Option BW2: BB BW of 5 MHz and RF BW of 20 MHz for all UL/DL signals and channels.
- Option BW3: BB BW of 5 MHz (unicast and broadcast) and RF BW of 20 MHz only in PDSCH/PUSCH. UE RF+BB BW up to 20MHz for other physical channels and signals.

Hereinafter, a method of repeatedly transmitting and receiving a PDCCH and/or an SIB 1 with SIB1 scheduling based on a Rel-18 RedCap UE with a limited bandwidth is described. However, it may be understood by those skilled in the art that the methods proposed in the disclosure are not limited thereto, and may be extended and applied to other methods of receiving a PDCCH and a PDSCH that exceed a bandwidth of a UE (e.g., transmitting and receiving Msg2 and Msg4 in an initial access stage of the UE when it is not pre-known that a bandwidth is reduced). Therefore, the methods proposed in the present embodiment may be applied to all types of transmission and reception methods expected by a BS and a UE as long as the principles of the disclosure are not infringed even without separate explanation.

Hereinafter, examples are given based on an NR system to explain the principles of the disclosure, but the proposed methods do not specifically limit the transmission and reception form of NR unless otherwise specified. Hereinafter, an example is given based on the characteristics and structure of the RedCap UE of Rel-18 to explain the principles of the disclosure, but the proposed methods are not specifically limited to support of the RedCap UE unless otherwise specified. Therefore, the methods proposed in the present embodiment may be applied to all structures and services of a wireless communication transmission and reception as long as the principles of the disclosure are not infringed even without separate explanation. The proposed methods are not limited to repetition of a PDCCH/PDSCH and may also be applied to repeated transmission and reception on other channels.

A distinction between each method or option below is intended to clarify the explanation and is not to be construed as limiting the meaning that each method or option needs to necessarily be implemented as an independent disclosure. For example, the methods/options described below may each be implemented separately, but at least some of the methods/options may be implemented in a combined form within a range that does not conflict with each other.

### <Option BW3>

In the present embodiment, a scenario of Option BW3 in which a baseband (BB) is reduced to 5 MHz for a PDSCH reception channel and a radio frequency (RF) BB is reduced to 20 MHz for all other UL/DL channels.

After searching for a cell to be connected, a UE receives a SSB and obtains an MIB. Then, the MIB receives a PDCCH that schedules the SIB1 and decodes the PDCCH to receive a PDSCH containing the SIB1. For convenience of explanation, the PDCCH that schedules the SIB1 is called Type0-PDCCH, and the PDSCH that includes the SIB1 is called SIB1 PDSCH. A CSS set for detecting Type0-PDCCH may be a Type0-PDCCH CSS set. A frequency range (bandwidth) of CORESET#0, as seen through the MIB, is an initial DL BWP, and the SIB1 PDSCH also has the same bandwidth. For CORESET#0, it may be configured to a maximum of 96 RB at an SCS of 15 kHz and a maximum of 48 RB at an SCS of 30 kHz. Therefore, a Rel-18 RedCap UE with a maximum reception BB bandwidth of a PDCSH limited to 5 MHz may not experience any problem in receiving Type0-PDCCH even if the UE complies with the current standard operation. However, SIB1 PDSCH received with the same initial DL BWP may experience degradation in reception performance due to limitations in the maximum BB bandwidth of the UE. In other words, when a UE with a maximum reception BB bandwidth of a PDSCH of 5 MHz accesses a cell in which an SIB1 PDSCH is not separately scheduled, the reception performance of the SIB1 PDSCH may be degraded.

The present embodiment proposes a method of repeated transmission and reception such that a Rel-18 RedCap UE with a reduced bandwidth may improve the reception performance of a PDSCH exceeding a reception bandwidth. The UE obtains an MIB via an SSB for initial connection and then receives an SIB1. In a cell in which access between the existing UE (e.g. Rel-15 NR UE or Rel-17 RedCap UE) and a Rel-18 RedCap UE is allowed, when the Type0-PDCCH and the SIB1 PDSCH are shared, there may be cases in which the Rel-18 RedCap UE receives a PDSCH exceeding the maximum reception bandwidth. This may correspond to a case in which a Rel-18 RedCap UE intends to receive the SIB1 by sharing an MO of CORESET#0, Type0-PDCCH CSS set with an existing UE.

The UE may receive a Type0-PDCCH with a BW of up to 20 MHz, but needs to receive an SIB1 PDSCH scheduled in the same BW with a BW of up to 5 MHz. When a range exceeding a reception BW is punctured to reception with a BW up to 5 MHz, reception performance may be inevitably degraded. Therefore, a method of repeatedly transmitting and receiving a PDSCH between a BS and a UE to preserve such reception performance may be proposed.

To this end, a method of repeating transmission and reception of an SIB1, a method of indicating a repetition period and number of times, or the like may be provided. The proposed methods below may be implemented alone or in combination.

The present embodiment proposes a method of repeated transmission and reception such that a Rel-18 RedCap UE with a reduced bandwidth may improve the reception performance of a PDSCH exceeding a reception bandwidth. The UE obtains an MIB via an SSB for initial connection and then receives an SIB1. In a cell in which access between the existing UE (e.g. Rel-15 NR UE or Rel-17 RedCap UE) and a Rel-18 RedCap UE is allowed, when the Type0-PDCCH and the SIB1 PDSCH are shared, there may be cases in which the Rel-18 RedCap UE receives a PDSCH exceeding the maximum reception bandwidth. This may correspond to a case in which a Rel-18 RedCap UE intends to receive the SIB1 by sharing an MO of CORESET#0, Type0-PDCCH CSS set with an existing UE.

The UE may receive a Type0-PDCCH with a BW of up to 20 MHz, but needs to receive an SIB1 PDSCH scheduled in the same BW with a BW of up to 5 MHz. When a range exceeding a reception BW is punctured to reception with a BW up to 5 MHz, reception performance may be inevitably degraded. Therefore, a method of repeatedly transmitting and receiving a PDSCH between a BS and a UE to preserve such reception performance may be proposed.

To this end, a method of repeating transmission and reception of an SIB1, a method of indicating a repetition period and number of times, or the like may be provided. The proposed methods below may be implemented alone or in combination.

## [BW3 Method 1] Configuration method for SIB1 PDSCH repeated transmission and reception

Repeated transmission and reception of a PDSCH is an operation of repeatedly transmitting and receiving the same PDSCH more than twice to compensate for degradation of the reception performance of a UE. Here, degradation of the reception performance of the UE may be caused, for example, by the UE receiving a PDSCH within a RF BW of 20 MHz, but decoding only a portion of the PDSCH without processing it within a bandwidth of 20 MHz due to limitation of a BB BW of 5 MHz.

The meaning of 'the same PDSCH' that is repeatedly transmitted and received in the disclosure may include 1) PDSCH with the same coded bit, 2) PDSCH with the same bit, and the like.

### [BW3 Method 1-1] Method of indicating the number of repeated transmissions with DCI

A UE may need to know the number of repeated transmissions of an SIB1 PDSCH to receive an SIB1 PDSCH repeatedly. The UE may know the number of repeated transmissions and a period thereof after obtaining the MIB, as in BW3 method 1-2, or may be dynamically notified through DCI.

The UE may fully receive Type0-PDCCH, and thus the UE may inform the number of repeated transmissions of the SIB1 PDSCH through the DCI. To this end, a field related to the number of repeated transmissions in the DCI may be configured.

PDSCH repetition in the current standard may be indicated by higher layer parameter *pdsch-AggregationFactor* or dynamically indicated by *repetitionNumber* in the TDRA configured by *PDSCH-TimeDomainResourceAllocation.* However, for Type0-PDCCH and SIB1 PDSCH, repeated transmission may not be instructed through this method because it is before RRC is configured. Therefore, a field indicating the number of repeated transmissions may be added to DCI format 1_0 with a CRC scrambled with an SI-RNTI.

Repeated transmission of the SIB1 PDSCH may be divided into the following cases: 1) when a PDCCH schedules one PDSCH, and 2) when a PDCCH schedules one PDSCH. Actual transmission and reception methods between a BS and a UE for each case are described in BW3 Method 2 and BW3 Method 3 below, and this BW3 Method 1-1 describes a field configuration and an instruction method thereof within DCI for each case.

## 1) When PDCCH schedules a plurality of PDSCHs

When the repeated transmission number is indicated through DCI, the repeated transmission number of the PDSCH may be indicated through a field in the DCI. For example, if a PDCCH indicates the number of repeated transmission and reception as N, a UE may know that there are N PDSCHs that are scheduled and transmitted thereafter. The corresponding field may include 2 bits, for example. Similar to *pdsch-AggregationFactor,* values of 1, 2, 4, and 8 may be indicated with 2 bits.

## 2) When PDCCH schedules one PDSCH

Alternatively, a PDCCH may indicate the remaining number of repetitions of a PDSCH. In this case, when it is repeated N times, a field may indicate N when first DCI is detected, and the number of repetitions may decrease by one like N-1 when second DCI is detected. The corresponding field may include 2 bits, for example. Values of 1, 2, 3, and 4 may be indicated with 2 bits. If there are 4 repeated transmissions, the first DCI may indicate 4 to indicate that the number of remaining repeated transmissions of DCI is 3. The last DCI may be indicated to 1 to indicate that it is the last DCI in a repeated transmission.

Whether a field configured in this way is used may be notified to the UE through the following BW3 method 1-2, along with whether the corresponding cell supports repeated transmission.

The proposed DCI repetition count field may be configured not only in the DCI containing the CRC that scrambles with the CS-RNTI for scheduling the SIB1 PDSCH, but also in the DCI containing the CRC that scrambles with the RA-RNTI when receiving msg2 and the P-RNTI when paging. Through this, the number of repeated transmissions may be configured to be included in msg2, paging message, or the like.

[BW3 Method 1-21 Method of notifying UE of related configurations

Before receiving an actual SIB1 PDSCH, a UE needs to know whether a cell in which repeated transmission and reception is performed supports the same, a period P, the number of repetitions N, or whether the number of repetitions may be dynamically indicated through DCI, and a related configuration. The number of repetition N may mean the number of repeated transmissions of a PDCCH or the number of frames in which repeated transmissions are performed. If the number of repetitions is predetermined and notified to the UE, a field in the DCI for the number of repeated transmissions may not be configured. Conversely, when a field within the DCI is configured and the UE is notified that the corresponding field is used, the number of repetitions N and the period P may not be configured. A method to inform a UE of these relevant configurations is proposed. An actual operation of a UE and a BS related to configurations will be described below using the following methods.

**1) Related configurations are predetermined**

When both an existing UE and a Rel-18 RedCap UE are allowed access to a cell, an SIB1 PDSCH may be repeatedly transmitted at regular intervals, and the period P and number of repetitions N may be predetermined. Alternatively, the number of repetitions may be indicated via DCI and the related configurations may also be predetermined.

For example, when a UE learns about an SCS and a PDCCH configuration for a SIB1 in relation to CORESET#0 through an MIB, the UE may know the determined P and N values accordingly. For 15 kHz 48 RB, P=4 and N=2 may be configured, and for 30 kHz 48 RB, P=4 and N=4 may be configured. In this case, the period P may be an even/odd frame unit in which an MO of CORESET#0 may be configured, and the number of repetition N may be an even/odd frame or slot unit.

Alternatively, the number of repeated transmissions of the PDSCH may be determined via DCI. In this case, whether to use the field indicating the number of repeated transmissions and the configuration of the field may be predetermined by using reserved bits in the DCI or in relation to the SCS and RB of CORESET#0, as in the example above.

**2) MIB**

Information about an MO and CORESET#0 of a Type0-PDCCH CSS set may be obtained by obtaining an MIB, and more precisely, the MO may be obtained with 4 bits of pdcch-configSIB1 configured with 8 bits, and CORESET#0 may be obtained with 4 bits. A table with 16 indices of 4 bits each is organized according to an SCS of an SSB and a PDCCH. For example, Tables 13-1 through 13-4 of TS38.213, in which a minimum channel bandwidth may be 5 MHz and the SCS of the SSB and the PDCCH are 15 kHz or 30 kHz, have one or more reserved indices. (Refer to examples in Table 6 below)

Table 6 is an excerpt from Table 13-1 in the document TS38.213.

[Table 6]

| Table 13-1: Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz | | | | |
|---|---|---|---|---|
| Index | SS/PBCH block and CORESET multiplexing pattern | Number of RBs $N_{RB}^{CORESET}$ | Number of Symbols $N_{symb}^{CORESET}$ | Offset (RBs) |
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

Therefore, one of methods of informing a relevant pre-configuration through an MIB may be to maintain an index configuration in the existing table and adding information about P and N or whether to indicate the number of repeated transmissions through DCI to a reserved index and informing the added information to the existing information.

Alternatively, a new column that provides information about P and N, or whether to indicate the number of repeated transmissions via DCI for each index of the existing table may be added. For the newly added information, existing NR UEs that do not require repeated reception may disregard the corresponding information or perform repeated reception like a UE with a reduced bandwidth, which may be at the discretion of the UE. Alternatively, when P=1 and N=1, the current index may be the same as an index on the current table without repeated transmission.

Another method is to utilize spare bits in an MIB. The MIB on the current standard has 1 bit of spare, and thus, based thereon, information indicating that there is no repeated transmission in the case of 0 and that there is repeated transmission in the case of 1, such as P=4 and N=2, may be indicated. Alternatively, the use of instruction of the number of repetitions via DCI may be indicated via a spare bit, whereby a repeated transmission instruction field is not used in the case of 0 and is used in the case of 1.

This may also be notified through a table related to an MO of Type0-PDCCH CSS set as in Table 13-11 in addition to a table related to CORESET#0. (Refer to example in Table 7 below) In this case, the MO of Type0-PDCCH CSS Set that schedules repeated transmission of an SIB1 PDSCH may be notified. For example, a PDCCH received in an MO of a specific index in Table 7 may schedule repeated transmission of an SIB1. When the UE receives a PDCCH from the MO of the corresponding index, it may be seen that a field indicating the number of repeated transmissions is used. Alternatively, it may be seen that the number of repetition N is predetermined, and thus the PDSCH received thereafter is transmitted repeatedly.

Table 7 is an excerpt from Table 13-11 in the document TS38.213.

[Table 7]

| Table 13-11: Parameters for PDCCH monitoring occasions for Type0-PDCCH CSS set - SS/PBCH block and CORESET multiplexing pattern 1 and FR1 | | | | |
|---|---|---|---|---|
| Index | $O$ | Number of search space sets per slot | $M$ | First symbol index |
| 0 | 0 | 1 | 1 | 0 |
| 1 | 0 | 2 | 1/2 | $\{0,$ if $i$ is even$\}, \{N_{\text{symb}}^{\text{CORESET}},$ if $i$ is odd$\}$ |
| 2 | 2 | 1 | 1 | 0 |
| 3 | 2 | 2 | 1/2 | $\{0,$ if $i$ is even$\}, \{N_{\text{symb}}^{\text{CORESET}},$ if $i$ is odd$\}$ |
| 4 | 5 | 1 | 1 | 0 |
| 5 | 5 | 2 | 1/2 | $\{0,$ if $i$ is even$\}, \{N_{\text{symb}}^{\text{CORESET}},$ if $i$ is odd$\}$ |
| 6 | 7 | 1 | 1 | 0 |
| 7 | 7 | 2 | 1/2 | $\{0,$ if $i$ is even$\}, \{N_{\text{symb}}^{\text{CORESET}},$ if $i$ is odd$\}$ |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

When one PDCCH schedules one PDSCH, a correlated MO may be configured to configure repeated transmission of the PDSCH. For the correlated MO, the PDSCH scheduled by the PDCCH monitored in the corresponding occasion may always be the result of a repeated transmission. An MO may be configured on two consecutive slots in every even/odd frame, and thus the correlated MO may also be the result configured on two consecutive slots. That is, it may be seen that this is the same as the current standard and two MOs are correlated at a specific index. Alternatively, the correlated MOs may be configured on more than 2 slots. In this index, the terminal may monitor and repeatedly receive Type0-PDCCH on more than 2 slots (not within one frame) rather than on the existing two consecutive slots.

**3) Separate/dedicated MO or additional MO**

When the MO of Type0-PDCCH is configured separately or dedicatedly in a Rel-18 RedCap UE, it may be expected that repeated transmission may be performed without any additional instruction. For example, when the number of repetitions is to be notified via DCI, a field related thereto needs to be added, and whether or not the field is used may vary depending on whether or not repeated transmission is performed. However, if Type0-PDCCH is detected in a separated/dedicated MO, it may be a default to receive repeatedly and use the corresponding field. When a separate/dedicated MO is configured, the P and N values are predetermined and may be repeatedly received accordingly when receiving Type0-PDCCH.

Alternatively, an MO may be configured in addition to the MO configured for an existing NR UE. In this case, the existing MO may receive Type0-PDCCH that does not schedule PDSCH repeated transmission and perform operations according to the existing NR standard without considering a repeated transmission number instruction or a repeated transmission number P. In the additional MO, Type0-PDCCH for scheduling PDSCH repeated transmission may be received, and the repeated transmission number instruction field may be configured and a predetermined repeated transmission number P may be considered.

The separate/dedicated MO or the additional MO may be the result of a separate initial DL BWP for a Rel-17 RedCap UE, or may be an additional configuration for the Rel-18 RedCap UE only.

[BW3 Method 1-3] Method of configuring field of DCI for scheduling PDSCH repeated transmission

In addition to adding the repeated transmission number field proposed in the BW3 method 1-1, a field within the existing DCI needs to be configured for repeated transmission. The DCI to be detected in the Type0-PDCCH CSS set is DCI format 1_0 with CRC scrambled with an SI-RNTI. Table 8 below shows a field configuration of the corresponding DCI extracted from TS38.212 (DCI format 1_0 with CRC scrambled by SI-RNTI).

[Table 8]

| ... |
| --- |
| The following information is transmitted by means of the DCI format 1_0 with CRC scrambled by SI-RNTI:<br><br>- Frequency domain resource assignment - $\left\lceil \log_2(N_{RB}^{DL,BWP}(N_{RB}^{DL,BWP}+1)/2) \right\rceil$ bits<br><br>   - $N_{RB}^{DL,BWP}$ is the size of CORESET 0<br>- Time domain resource assignment - 4 bits as defined in Clause 5.1.2.1 of [6, TS38.214]<br>- VRB-to-PRB mapping - 1 bit according to Table 7.3.1.2.2-5<br>- Modulation and coding scheme - 5 bits as defined in Clause 5.1.3 of [6, TS38.214], using Table 5.1.3.1-1<br>- Redundancy version - 2 bits as defined in Table 7.3.1.1.1-2<br>- System information indicator - 1 bit as defined in Table 7.3.1.2.1-2<br>- Reserved bits - 17 bits for operation in a cell with shared spectrum channel access in frequency range 1 or for operation in a cell in frequency range 2-2; otherwise 15 bits |
| ... |

The case in which one PDCCH schedules a plurality of PDSCHs may be first considered. The repeated transmission number may be indicated via DCI or may be a preset value, and the values of fields applied to PDSCHs to be repeatedly transmitted may be the same or different.

VRB-to-PRB mapping, modulation and coding scheme (MCS), and a system information indicator may be applied equally to a repeatedly transmitted PDSCH.

Frequency domain resource assignment (FDRA) indicates the location of the PDSCH in the frequency domain. The frequency domain of the PDSCH may generally be referred to as an initial DL BWP, which is the frequency domain of Type0-PDCCH, and thus it may be applied equally to the repeatedly transmitted PDSCH, and the PDSCH may be located in the same frequency domain.

Time domain resource assignment (TDRA) is a field that indicates the location of the time domain of a PDSCH, and values of dmrs-TypeA-Position, PDSCH mapping type, K0, and start and length indicator value (SLIV) are given. K0 represents the location of a reception slot of the PDSCH based on the reception slot of the PDCCH, and SLIV represents the number and location of a symbol of a slot, in which the PDSCH is located. dmrs-TypeA-Position and PDSCH mapping type may be applied equally to all PDSCHs that are repeatedly transmitted.

FIG. 6 illustrates an example of a repeatedly transmitted physical downlink shared channel (PDSCH). In detail, FIG. 6 illustrates an example showing a PDSCH that is repeatedly transmitted four times and a PDCCH that schedules the same. It is assumed that the repeatedly transmitted PDSCH is transmitted through four consecutive slots. For SIB1, K0 of DCI format 1_0 with CRC scrambled with an SI-RNTI is always 0, and thus a PDCCH and PDSCH#1 are always located in the same slot. That is, K0 is applied to the very first PDSCH (PDSCH#1).

SLIV indicates the locations of the symbols of a slot in which the PDSCH is located. The same SLIV may be applied to repeatedly transmitted PDSCHs, and thus the locations of symbols of respective transmission slots may be the same. This may be the same as the case of repeated transmission given by *pdsch-AggregationFactor* in the existing standard.

Alternatively, SLIV may be applied only to a first PDSCH. The locations of the symbols of PDSCHs transmitted thereafter may be determined relative to the location o a symbol of a previous PDSCH. That is, the location of a starting symbol of a PDSCH of slot n+1 may be determined according to how many symbols the starting symbol is located relative to the location of a last symbol of a PDSCH of slot n. A symbol difference between these PDSCHs may be a preset value, identical to the repeated transmission number instruction of the PDSCH, or may be indicated via DCI. When indicated via DCI, the correspnding value may be configured as a separate field or may be configured together with or in combination with a field indicating the repeated transmission number. In other words, a symbol difference between PDSCHs may be indicated together with the repeated transmission number indicated by DCI.

A redundancy version (RV) is a value related to HARQ retransmission and indicates how coded bits (PDSCH) are configured with systematic bits and redundancy bits. The RV may be a value for a first PDSCH. Then, the RVs in the repeatedly transmitted PDSCH may be the same or different. When the RVs are the same, the repeatedly transmitted PDSCH may be configured with the same information bits and coded bits. When the RVs are different, the PDSCHs after the first PDSCH have different RVs from the first PDSCH, and this may be in the form of a fixed cycle as in the current standard. For example, with rotation of {0, 2, 3, 1}, the subsequent PDSCH may have the following values compared to the previous PDSCH. Whether RV rotation is applied may be indicated using reserved bits in DCI. RV rotation may be determined according to a target code rate of MCS. For example, if only half of the PDSCH is received and the target code rate exceeds 1/2, it may be advantageous for the RV to receive both the information bits and the redundancy bits equally to improve the reliability of the same coded bits rather than receiving additional redundancy information through RV rotation.

**[BW3 Method 2] PDSCH repeated transmission method of BS**

In the current standard, SIB1 may be transmitted at a cycle of 160 ms based on a multiplexing pattern 1 of an SSB and CORESET#0. The SIB1 may be transmitted repeatedly within a period of 160 ms according to network implementation, but a default repetition period is 20 ms. CORESET#0 is located in 2 consecutive slots in every odd/even frame. In general, a UE connecting initially may expect a repeated transmission period of the SIB1 to be 20 ms. In the current standard, it may mean repeated transmission of the same information in the SIB1 within a period of 160 ms, and the proposed repeated transmission may mean repeating the same transmission only at a specific location to improve PDCCH and SIB1 reception performance. Therefore, to distinguish between repeated transmissions in the current standard and repeated transmission in this specification, the repeated transmissions may be referred to as first repetitive transmission and second repetitive transmission, respectively. In this specification, unless specifically distinguished or without distinction, it is not difficult to understand, repeated transmission means the second repeat transmission.

[BW3 Method 2-1] Transmission when SIB1 does not exceed 5 MHz

This may be a case in which CORESET#0 of an SCS of 15 kHz is configured to 24 RB. Alternatively, this may also be applied to a case in which separate/dedicated CORESET#0 is configured in a UE. In this case, a separate/dedicated initial DL BWP may be configured and a new CORESET#0 configuration table that does not consider co-existence may be introduced. For example, it may always be 24 RB of an SCS of 15 kHz, and a table may be configured with the number of symbols, an offset value from an SSB, or the like.
Although a PDSCH may be received within 5 MHz due to reduced cost, a cell edge situation, or the like of a Rel-18 RedCap UE, the PDSCH may be transmitted repeatedly considering a case in which reception performance is degraded.

[BW3 Method 2-2] intra-frame repeated transmission

An MO of Type0-PDCCH CSS set may be configured for every even/odd frame and may be located in 2 consecutive slots within one frame. A PDSCH may be repeatedly transmitted in consecutive slots starting from a slot in which Type0-PDCCH is received. A PDCCH may schedule repeated transmission of the PDSCH in consecutive slots, as in the example of FIG. 6. The repeated transmission number may be indicated via DCI as in BW3 Method 1-1. In this case, the repeated transmission number, the location in a slot of the repeatedly transmitted PDSCH, and whether RV rotation is performed may be indicated. A method of determining a location on the time axis of the PDSCH by a symbol difference between PDSCHs may only be applied to BW3 Method 2-2.
FIG. 7 illustrates an example of repeated transmission of a PDSCH in two consecutive slots within one frame.
Referring to FIG. 7, in the case of repeated transmission in which one PDCCH schedules one PDSCH, this may be repeated transmission in two consecutive slots within a frame. In such cases, the number of remaining repetitions may be notified via DCI, or a repeated transmission number and a period may be predetermined. In such cases of repeated transmission, scheduling information of the repeatedly transmitted PDSCH may be the same. In other words, a PDCCH may also be transmitted repeatedly. This allows the UE to receive multiple PDSCHs with just one PDCCH reception.
BW3 Method 2-2 may be configured/applied in parallel to BW3 Method 2-3 below.

[BW3 Method 2-3] inter-frame repeated transmission

An MO of Type0-PDCCH CSS set may be configured for every even/odd frame, and it may be assumed that the UE before RRC connected transmits SIB1 for every even/odd frame. This means the first repeated transmission, which is repeated transmission of SIB1 of the same information within a period of 160 ms. When the first repeated transmission is performed, the second repeated transmission may be performed. In other words, in the first repeated transmission in which the same information is repeatedly transmitted, scheduling information such as FDRA and TDRA may also be performed in the same way as in the second repeated transmission. In this case, SLIV and RV may be the same in all PDSCHs.

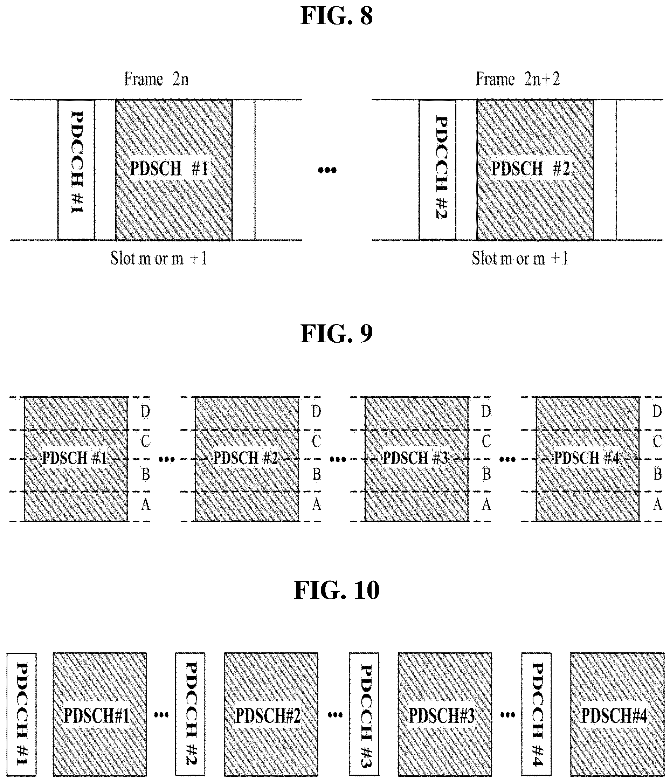

FIG. 8 illustrates an example of repeated transmission in consecutive even frames.
FIG. 8 shows the second repeated transmission in which an MO is configured in an even frame. The PDCCH monitoring location and the frame in which the PDSCH is transmitted are the same as the first repeated transmission, but the information of the PDCCH and PDSCH, the slots and symbols in which the PDCCH and the PDSCH are located, and the like may be different. It may be said that Nth second repeated transmission is performed in every P-th even/odd frame, and the first repeated transmission is performed in other frames.

### [BW3 Method 3] Repeated transmission method of PDSCH of UE

According to the current standard, a UE may obtain an MIB and know information of CORESET#0 and information Type0-PDCCH CSS set through pdcch-configSIB 1 information. Through this, Type0-PDCCH CSS set is monitored in 2 consecutive slots for every odd/even frame and DCI format 1_0 with CRC scrambled by SI-RNTI is received.

When the UE repeatedly receives a PDSCH, the UE may receive the PDSCH by only changing the location of a BB BW within an RF BW.

FIG. 9 is a diagram for explaining baseband processing related to repeated reception of a PDSCH by a UE.

When a PDSCH is repeatedly received 4 times as in FIG. 9, the UE may repeatedly receive the PDSCH by changing a BB BW in the order of A, B, C, and D for each reception.

Through BW3 Method 2-1, the UE may know whether a cell the UE accesses supports repeated transmission, a period and number of repeated transmissions, and the like. The UE may also know whether RF retuning is needed in the corresponding cell.

The repeated transmission number may be fixed and the UE may know what type of repeated transmission it is, and accordingly, the number of PDSCH transmissions in a frame in which Type0-PDCCH is received may be determined. Therefore, the UE may receive DCI and receive a PDSCH within the same slot through scheduling information. PDSCHs may be received repeatedly in sequence in subsequent slots.

When the repeated transmission number is indicated through DCI, the number of subsequent repeatedly transmitted PDSCHs may be known by receiving the DCI. Based on information such as the repeated transmission number, the location on the time axis of the PDSCH, and RV rotation, subsequent repeatedly transmitted PDSCHs may be received in sequence.

### [BW3 Method 3-1] Reception method of UE when PDCCH schedules multiple PDSCHs

Through BW3 Method 2-1, the UE may know whether a cell the UE accesses supports repeated transmission, a period and number of repeated transmissions, and the like. The UE may also know whether RF retuning is needed in the corresponding cell.

A PDCCH and a PDSCH are received according to an MO of Type0-PDCCH set and are punctured and received when the maximum transmission bandwidth of the UE is exceeded. In this case, it may be advantageous in terms of reception performance to align the location of the location of an initial reception bandwidth of the UE with the lowest PRB index. As in FIG. 6, which is an example of CORESET#0 configuration with 48 PB of 15 kHz, the UE receives PDCCH#1 and PDSCH#1 only in a region of 25 RB.

When the received PDCCH and PDSCH are repeatedly transmitted, the UE may, at its discretion, decode the currently received PDCCH and, if it fails, expect subsequent repeated reception, or may not attempt decoding and expect repeated reception. The UE buffers the received region of PDCCH#1/PDSCH#1 for repeated reception.

Then, the UE performs RF retuning for repeated reception. Repeatedly transmitted PDCCH#2/PDSCH#2 are received after RF retuning. This corresponds to reception of 25 RB of PDCCH#2/PDSCH#2 in FIG. 6.

Referring to the example of FIG. 6, when the UE receives PDCCH#1/PDSCH#1, the UE may fully receive two PDCCH candidates of AL4, one candidate of AL8, and half of a candidate of AL16. The UE may attempt to decode the corresponding PDCCH candidates and, if unsuccessful, perform a repeated reception operation including RF retuning.

### [BW3 Method 3-2] Reception method of UE when PDCCH schedules one PDSCH

The PDCCH may be transmitted as many times as the repeated transmission number of the PDSCH.

The locations in a frame and a slot of the PDCCH and the PDSCH may vary depending on a transmission method of a BS (BW3 Method 2-1, 2-2, and 2-3). In the case of such repeated transmission, the UE may repeatedly receive the PDSCH by receiving the PDSCH at least once without receiving the entire PDCCH.

FIG. 10 is a diagram for explaining repeated reception when one PDCCH schedules one PDSCH.

For example, in the example of FIG. 10, when the remaining repeated transmission number is indicated via DCI, a UE may receive PDCCH#1 and know that the repeated transmission number is 4. The UE may receive PDSCH#1 transmitted in the same slot and determine whether to repeat reception thereafter. Scheduling of PDSCH#2 may be determined based on PDCCH#2, and when the information may be the same, the UE may receive PDSCH#2 even if the UE does not receive PDCCH#2. Then, PDSCH#3 and PDSCH#4 may also be received without receiving a PDCCH. When PDCCH#3 is completely received and the corresponding DCI indicates that there are 2 repeat receptions left, PDSCH#3 and PDSCH#4 may be repeatedly received without receiving PDCCH#4.

In the present embodiment, methods are proposed by which a BS and a UE with a limited (or reduced) bandwidth may repeatedly transmit and receive an SIB1 PDSCH. This allows UEs including a Rel-18 RedCap UE to follow a configuration of the existing NR standard without change despite a bandwidth being limited, and preserve the reception performance degraded due to the reduced capability.

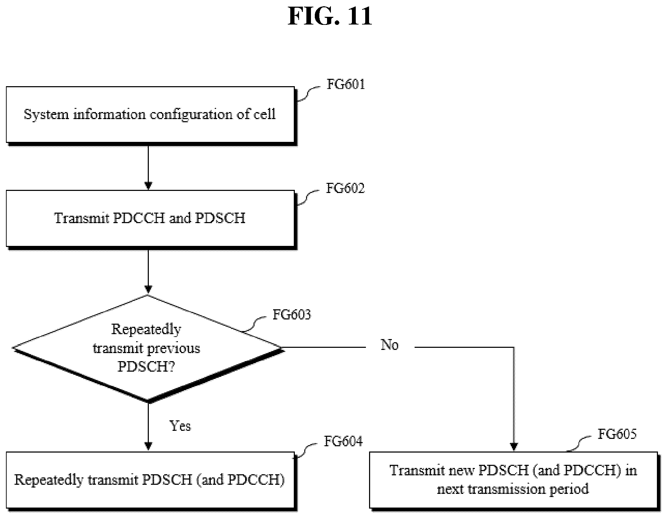

FIG. 11 shows an example of an operation sequence in which a BS repeatedly transmits a PDSCH such that a RedCap UE may receive a PDSCH shared with an existing UE with higher performance. The BS configures system information of a cell (FG601). The system information of the cell may include whether a PDSCH is repeatedly transmitted, whether a field related to repeated transmission in DCI is used, or the like. This information may be reported to the UE through an MIB. The BS transmits a PDCCH and a PDSCH according to a configured period (FG602). The BS determines whether to repeatedly transmit the PDSCH (FG603). Repeated transmission of the PDSCH may follow a fixed period (BW3 Method 1-2) or be dynamically notified through DCI according to implementation of the BS (BW3 Method 1-1). When repeated transmission is required, the BS repeatedly transmits the PDSCH (FG604). Depending on a configuration, when the PDSCH is repeatedly transmitted, the PDCCH may also be repeatedly transmitted (BW3 Method 3-2). If repeated transmission is not required, the BS transmits the PDCCH and the PDSCH in a next transmission period (FG605).

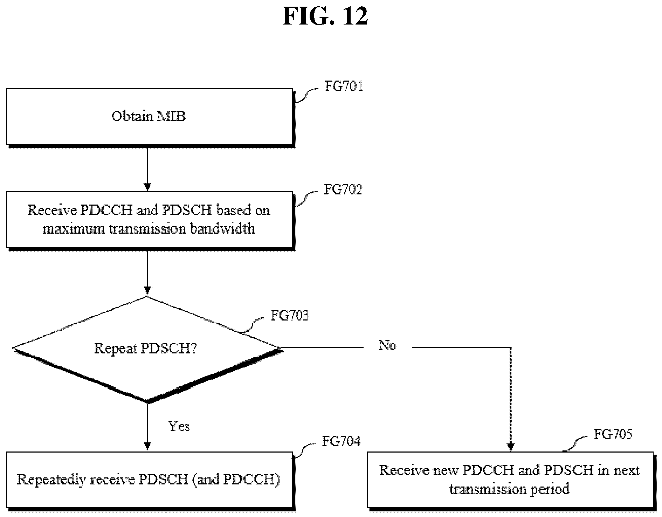

FIG. 12 shows an example of an operation sequence in which a RedCap UE repeatedly receives a PDSCH to receive the PDSCH shared with an existing UE with higher performance. The terminal receives an SSB and obtains an MIB (FG701). The MIB may include whether the corresponding cell supports repeated transmission, a period of repeated transmission, and whether a field related to repeated transmission in DCI are used. The UE receives a PDCCH and a PDSCH according to a configured period (FG702). The UE determines whether the received PDSCH may be repeatedly received (FG703). Whether or not to repeat reception in this case corresponds to the determined repeated transmission period (BW3 Method 1-1) or may be notified through a field in the DCI (BW3 Method 1-2). When the PDSCH is received repeatedly, the UE receives a PDSCH repeatedly (FG604). Through this, the reception performance may be improved by decoding together with the previous PDSCH. If the PDSCH is not repeatedly received, the UE receives a new PDCCH and PDSCH in a next period (FG605).

In the present embodiment, a Rel-18 RedCap UE with a reduced bandwidth may preserve degraded reception performance by repeatedly receiving a PDSCH exceeding a reception bandwidth. The UE may repeatedly receive the PDSCH based on the repeated transmission number in the DCI, and the UE may also autonomously determine whether to repeatedly receive the PDCCH. Through this, there may be no problem in receiving an SIB1 PDSCH in a pre-RRC connection stage even without configuring a separate PDSCH or initial DL BWP for a Rel-18 RedCap UE.

**<Option BW1>**

The present embodiment assumes a scenario of Option BW1 in which both a radio frequency (RF) and baseband (BB) are limited to 5 MHz for all UL/DL channels.

If a Rel-18 RedCap UE supports up to a BW of 5 MHz, the Rel-18 RedCap UE may not properly support a configuration on the existing NR system. For an NR band, there are bands that may support 5 MHz, and thus the Rel-18 RedCap UE may be supported in those bands. The maximum transmission BW configuration in a BW of 5 MHz is as shown in Table 9 below (excerpt from TS38.101).

[Table 9]

The maximum transmission bandwidth configuration $N_{RB}$ for each UE channel bandwidth and subcarrier spacing is specified in Table 5.3.2-1.

Table 5.3.2-1: Maximum transmission bandwidth configuration $N_{RB}$

| SCS (kHz) | 5 MHz $N_{RB}$ | 10 MHz $N_{RB}$ | 15 MHz $N_{RB}$ | 20 MHz $N_{RB}$ | 25 MHz $N_{RB}$ | 30 MHz $N_{RB}$ | 40 MHz $N_{RB}$ | 50 MHz $N_{RB}$ | 60 MHz $N_{RB}$ | 70 MHz $N_{RB}$ | 80 MHz $N_{RB}$ | 90 MHz $N_{RB}$ | 100 MHz $N_{RB}$ |
|---|---|---|---|---|---|---|---|---|---|---|---|---|---|
| 15 | 25 | 52 | 79 | 106 | 133 | 160 | 216 | 270 | N/A | N/A | N/A | N/A | N/A |
| 30 | 11 | 24 | 38 | 51 | 65 | 78 | 106 | 133 | 162 | 189 | 217 | 245 | 273 |
| 60 | N/A | 11 | 18 | 24 | 31 | 38 | 51 | 65 | 79 | 93 | 107 | 121 | 135 |

Referring to Table 9, the maximum transmittable BW in BW of 5 MHz is 25 RB at 15 kHz or 11 RB at 30 kHz. In other words, a BW of the Rel-18 RedCap UE may be configured to a maximum of 25 RB or 11 RB, which may impose restrictions on CORESET configuration, and the like. For example, only some of configurations of the SSB and COERSET for Type0-PDCCH CSS set (CORESET#0) of the existing NR system may be used.

[Table 10]

Table 13-1: Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz

| Index | SS/PBCH block and CORESET multiplexing pattern | Number of RBs $N_{\mathrm{RB}}^{\mathrm{CORESET}}$ | Number of Symbols $N_{\mathrm{symb}}^{\mathrm{CORESET}}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |

| 10 | 1 | 48 | 3 | 12 |
|---|---|---|---|---|
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

Table 10 is an excerpt from TS38.213 and shows a configuration of CORESET#0 available at an SCS of 15 kHz and a BW of 5 MHz. The Rel-18 RedCap UE may only use configurations of index 0 to 5 in Table 10 above. Other indexes may be difficult to use with the Rel-18 RedCap UE when the number of CORESET RBs exceeds 25.

All configurations exceed 11 RB in a BW of 30 kHz and 5 MHz, and thus either a new configuration specific to Rel-18 RedCap may be required, or 24RB of SSB may need to be received by puncturing the new configuration to fit a bandwidth allowed by the UE.

The current standard states that a CORESET may be configured in 6 RB units, and thus reception may not be smooth with 11 RB at 30 kHz. Therefore, the maximum transmission bandwidth at 30 kHz is increased to 12 RB, and assuming this, performance verification of Rel-18 RedCap is underway. In the present embodiment, both the cases in which the maximum transmission bandwidth at 30 kHz is 11 RB and 12 RB are considered and described. In other words, scenarios to applied to both cases or to be applied to each case individually are assumed.

After searching for a cell to be connected, a UE receives a SSB and obtains an MIB. Then, the MIB receives a PDCCH that schedules the SIB1 and decodes the PDCCH to receive a PDSCH containing the SIB1. For convenience of explanation, the PDCCH that schedules the SIB1 is called Type0-PDCCH, and the PDSCH that includes the SIB1 is called SIB1 PDSCH. A CSS set for detecting Type0-PDCCH may be a Type0-PDCCH CSS set. A frequency range (bandwidth) of CORESET#0, as seen through the MIB, is an initial DL BWP, and the SIB1 PDSCH also has the same bandwidth. Therefore, a Rel-18 RedCap UE with a maximum bandwidth limited to 5 MHz may only receive 25 RB at 15 kHz and 11 RB (or 12 RB) at 30 kHz, and thus only some of possible CORESET#0 configurations may fully receive a Type0-PDCCH and an SIB1 PDSCH. In other words, when a UE is connected to a cell for which CORESET#0 is not separately set for a UE with a maximum bandwidth of 5 MHz, Type0-PDCCH and SIB1 PDSCH reception performance may be degraded.

A method of repeated transmission and reception such that a Rel-18 RedCap UE with a reduced bandwidth may repeatedly transmit and receive a PDCCH and PDSCH exceeding a reception bandwidth is proposed. This may correspond to an operation in which the UE before RRC connection obtains an MIB through an SSB and then receives SIB1. This may correspond to a case in which Type0-PDCCH and SIB1 PDSCH are shared in a cell in which access of both existing UEs (e.g. Rel-15 NR UE and Rel-17 RedCap UE) and a Rel-18 RedCap UE is allowed. In other words, it may be a case in which CORESET#0 is shared with the existing UE (shared CORESET#0).

To this end, a method of repeated transmission and reception of Type0-PDCCH, a method of repeated transmission and reception of SIB1, a method of indicating a repetition period and number of times, and the like may be provided. The proposed methods below may be implemented alone or in combination.

**[BW1 Method 1] Method for UE with reduced bandwidth to receive Type0-PDCCH and PDSCH at the same time**

The present embodiment proposes an operation of a UE with a reduced bandwidth to receive an SSB of 15 kHz or 30 kHz, acquire an MIB, know MO information of CORESET#0 and Type0-PDCCH CSS set, and receive the same. CORESET#0 may be configured to 24, 48, and 96 RB at 15 kHz and to 24 and 48 RB at 30 kHz. Only when CORESET#0 is configured to 24 RB at 15 kHz, a UE with a reduced bandwidth may perform full reception. CORESET#0 has a resource elements group (REG) bundle size of 6, and thus one CCE includes one REG bundle. An interleaver size is 2, and thus a CORESET is divided in half, and PRBs are mapped sequentially into the lower half and the upper half. As described above, a frequency range (bandwidth) of CORESET#0 is an initial DL BWP of a UE, and the SIB1 PDSCH also has the same bandwidth.

In BW1 Method 1, Type0-PDCCH and PDSCH reception methods of the UE may be considered by dividing the methods into a case in which CORESET#0 does not exceed 5 MHz, in other words, when it is configured to 24 RB of 15 kHz, and a case in which CORESET#0 exceeds 5 MHz.

[BW1 Method 1-1] Type0-PDCCH and PDSCH reception when CORESET#0 does not exceed 5 MHz

This may be a case in which CORESET#0 of an SCS of 15 kHz is configured to 24 RB. Alternatively, this may also be applied to a case in which separate/dedicated CORESET#0 is configured in a UE. In this case, a separate/dedicated initial DL BWP may be configured and a new CORESET#0 configuration table that does not consider co-existence may be introduced. For example, it may always be 24 RB of an SCS of 15 kHz, and a table may be configured with the number of symbols, an offset value from an SSB, or the like.

[BW1 Method 1-2] Type0-PDCCH and PDSCH reception when CORESET#0 exceeds 5 MHz

After the UE obtains an MIB and verifies information (k_ssb and offset) of CORESET#0, RF retuning may be required for reception. If a cell is allowed to access the Rel-18 RedCap UE, it may be expected to configure an SSB - CORESET#0 TDM configuration (offset (RBs)) that does not require retuning to start Type0-PDCCH reception.

For example, the RB offset (and k_ssb) may be 0, making the SSB and the lowest RB of CORESET#0 the same. For these configurations, these configurations may be added to a reserved index of the existing CORESET#0 configuration table. All RBs within a BW of 5 MHz (25 or 11RB) of the UE may need to be located in RBs of CORESET#0. Then, the UE may receive Type0-PDCCH by puncturing outside the BW.

It is necessary to predetermine which region of CORESET#0 the UE needs to receive by considering a reception operation after puncturing of the UE. In case of no repeated reception, it may be advantageous for a location of a reception bandwidth of the UE to correspond to a PRB (PRB#25 or PRB#11) corresponding to the maximum transmission bandwidth of the UE from a start PRB (PRB#0) of CORESET#0 as in the example above.

The number of candidates for CORESET#0 is determined by AL, and thus even if interleaving is applied and mapped starting from the lowest PRB index, there may be a case in which some PRBs containing the highest PRB index are not used. For example, for CORESET#0 with 24 RB and 3 symbols, a first CCE is mapped to PRB#0 and PRB#1, and a second CCE is interleaved and mapped to PRB#12 and PRB#13. Therefore, mapping that CORESET#0 is divided into upper and lower halves and filled from the bottom up may be considered, and when there is an unused CCE, the CCE may be close to the highest PRB index. Therefore, when receiving Type0-PDCCH without repeated reception, it may be advantageous to receive the Type0-PDCCH by excluding a part in which there is a possibility that an actual PDCCH candidate is not located.

**[BW1 Method 2] Configuration method for Type0-PDCCH and SIB1 PDSCH repeated transmission and reception**

Repeated transmission and reception of a PDCCH and a PDSCH is an operation of repeatedly transmitting and receiving the same PDCCH and PDSCH more than twice to compensate for degradation of the reception performance of a UE. Here, degradation of the reception performance of the UE may be a result of not receiving by puncturing a region exceeding a maximum transmission bandwidth of the UE, as in BW1 Method 1 above.

The meaning of 'same PDCCH' repeatedly transmitted and received in BW1 Method 2 may include 1) PDCCH with identical coded bits, 2) PDCCH with identical information bits, and 3) PDCCH containing identical scheduling information. The meaning of 'the same PDSCH' that is repeatedly transmitted and received may include 1) PDSCH with the same coded bit, 2) PDSCH with the same bit, and the like.

[BW1 Method 2-1] Method of indicating relevant pre-configuration

The period P and the number of repetitions N of repeated transmission and reception, whether repeated transmission and reception is supported in a corresponding cell, and whether the number of repetitions may be dynamically indicated through DCI, and the number of repetitions N may mean the number of repeated transmissions of the PDCCH or the number of frames in which repeated transmissions are performed. The UE needs to know the configurations related thereto before actually receiving Type0-PDCCH and SIB1 PDSCH. Accordingly, a method to inform a UE of these relevant configurations is proposed. An actual operation of a UE and a BS related to configurations will be described below using the following methods.

**1) Related configurations are predetermined**

When both an existing UE and a Rel-18 RedCap UE are allowed access to a cell, Type0-PDCCH with the same scheduling may be repeatedly transmitted at regular intervals, and the period P and number of repetitions N may be predetermined. The number of repetitions may be indicated via DCI and the related configurations may also be predetermined. Predetermined may mean that the configurations are determined as in the standard.

For example, when a UE learns about an SCS and a PDCCH configuration for a SIB1 in relation to CORESET#0 through an MIB, the UE may know the determined P and N values accordingly. For 15 kHz 48 RB, P=4 and N=2 may be configured, and for 30 kHz 48 RB, P=4 and N=4 may be configured. In this case, the period P may be an even/odd frame unit in which an MO of CORESET#0 may be configured, and the number of repetition N may be an even/odd frame or slot unit.

As another example, the repeated transmission number of a PDSCH scheduled by a PDCCH may be dynamically indicated via DCI. In this case, whether to use the field indicating the number of repeated transmissions and the configuration of the field may be notified through reserved bits in the DCI or may be predetermined in relation to the SCS and RB of CORESET#0, as in the example above.

**2) MIB**

As described above, information about an MO and CORESET#0 of a Type0-PDCCH CSS set may be obtained by obtaining an MIB, and more precisely, the MO may be obtained with 4 bits of pdcch-configSIB 1 configured with 8 bits, and CORESET#0 may be obtained with 4 bits. A table with 16 indices of 4 bits each is organized according to an SCS of an SSB and a PDCCH. For example, Tables 13-1 through 13-4 of TS38.213, in which a minimum channel bandwidth may be 5 MHz and the SCS of the SSB and the PDCCH are 15 kHz or 30 kHz, have one or more reserved indices. (Refer to examples in Table 6)

Therefore, one of methods of informing a relevant pre-configuration through an MIB may be to maintain an index configuration in the existing table and information about P and N or whether to indicate the number of repeated transmissions through DCI to a reserved index.

Alternatively, a new column that provides information about P and N, or whether to indicate the number of repeated transmissions via DCI for each index of the existing table may be added. For the newly added information, existing NR UEs that do not require repeated reception may disregard the corresponding information or perform repeated reception like a UE with a reduced bandwidth, which may be at the discretion of the UE. Alternatively, when P=1 and N=1, the current index may be the same as an index on the current table without repeated transmission. Information related to such repeated transmissions is preferred or expected to be configured in the SSB - CORESET#0 TDM configuration (offset (RBs)) which does not require retuning to start Type0-PDCCH reception.

Another method is to utilize spare bits in an MIB. The MIB on the current standard has 1 bit of spare, and thus, based thereon, information indicating that there is no repeated transmission in the case of 0 and that there is repeated transmission in the case of 1, such as P=4 and N=2, may be indicated.

This may also be notified through a table related to an MO of Type0-PDCCH CSS set as in Table 13-11 in addition to a table related to CORESET#0. (Refer to example in Table 7) In this case, a location at which Type0-PDCCH that is repeatedly transmitted is to be monitored may be notified. For example, some kind of correlated MO may be configured. For the correlated MO, the PDSCH monitored in the corresponding occasion may always be the result of a repeated transmission. An MO may be configured on two consecutive slots in every even/odd frame, and thus the correlated MO may also be the result configured on two consecutive slots. That is, it may be seen that this is the same as the current standard and two MOs are correlated at a specific index. Alternatively, the correlated MOs may be configured on more than 2 slots. In this index, the terminal may monitor and repeatedly receive Type0-PDCCH on more than 2 slots (not within one frame) rather than on the existing two consecutive slots.

### 3) Separate/dedicated MO or additional MO

When the MO of Type0-PDCCH is configured separately or dedicatedly in a Rel-18 RedCap UE, it may be expected that repeated transmission may be performed without any additional instruction. For example, when the number of repetitions is to be notified via DCI, a field related thereto needs to be added, and whether or not the field is used may vary depending on whether or not repeated transmission is performed. However, if Type0-PDCCH is detected in a separated/dedicated MO, it may be a default to receive repeatedly and use the corresponding field. When a separate/dedicated MO is configured, the P and N values are predetermined and may be repeatedly received accordingly when receiving Type0-PDCCH.

Alternatively, an MO may be configured in addition to the MO configured for an existing NR UE. In this case, the existing MO may receive Type0-PDCCH without repeated transmission, and the additional MO may receive Type0-PDCCH configured with repeated transmission.

The separate/dedicated MO or the additional MO may be the result of a separate initial DL BWP for a Rel-17 RedCap UE, or may be an additional configuration for the Rel-18 RedCap UE only.

[BW1 Method 2-2] Method of configuring field in CORESET#0 and DCI

The number of times N and the period P of repeated transmission and reception may be predetermined and are known to a UE through BW1 Method 2-1, and a BS may configure CORESET#0 in which Type0-PDCCH is to be repeatedly transmitted accordingly. The same PDCCH may be transmitted consecutively N times at regular intervals (every 2*P frame).

BW1 Method 2-2 mainly describes a case in which the number of repeated transmissions and receptions N and the period P are predetermined.

The DCI to be detected in the Type0-PDCCH CSS set is DCI format 1_0 with CRC scrambled with an SI-RNTI.

Referring back to Table 8 with a field configuration of the corresponding DCI extracted from TS38.212,

- VRB-to-PRB mapping, modulation and coding scheme, and system information indicator may have the same value in repeatedly transmitted PDCCHs.
- Frequency domain resource assignment (FDRA) indicates the location of the PDSCH in the frequency domain. The frequency domain of the PDSCH may generally be referred to as an initial DL BWP, which is the frequency domain of Type0-PDCCH, and thus it may have the same value in the repeatedly transmitted PDCCHs.
- Time domain resource assignment (TDRA) is a field that indicates the location of the time domain of a PDSCH, and values of dmrs-TypeA-Position, PDSCH mapping type, K0, and SLIV are given. K0 represents the location of a reception slot of the PDSCH based on the reception slot of the PDCCH, and SLIV represents the number and location of a symbol of a slot, in which the PDSCH is located.

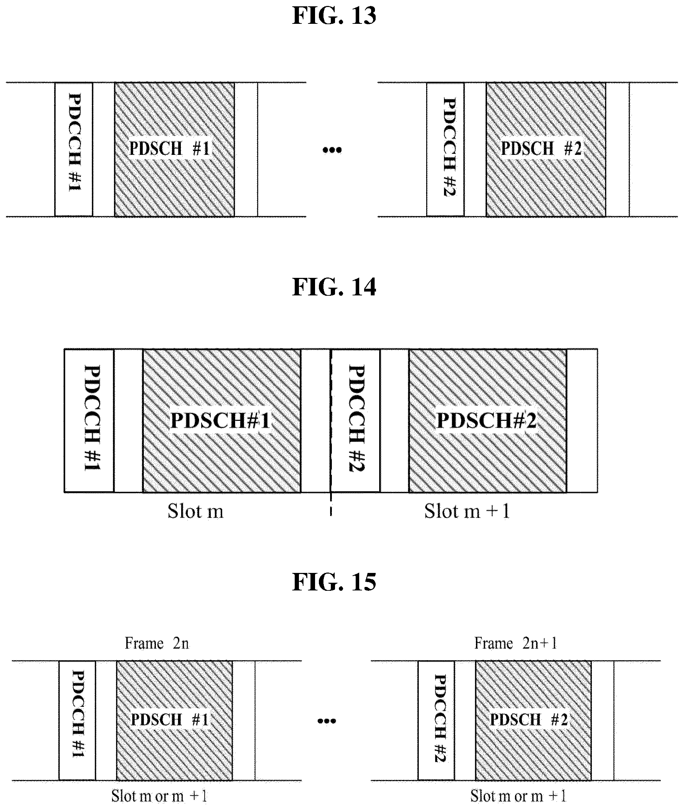

FIG. 13 illustrates an example of a repeatedly transmitted PDCCH and PDSCH.

For SIB1, K0 of DCI format 1_0 with CRC scrambled with an SI-RNTI is always 0, and thus a PDCCH and PDSCH are always located in the same slot. If the SLIV has the same value, each PDSCH has a fixed number of symbols and location within the same slot. Therefore, it may be seen that the TDRA field may have the same value within the repeatedly transmitted PDCCHs, and the scheduled PDSCH is also at the same location within the same slot.

A redundancy version (RV) is a value related to HARQ retransmission and indicates how coded bits (PDSCH) are configured with systematic bits and redundancy bits. The RVs in the repeatedly transmitted PDCCHs may be the same or different. When the RVs are the same, the repeatedly transmitted PDCCHs may be configured with the same information bits and coded bits, and the PDSCH may also be configured with the same information bits and coded bits. When the RVs are different, the repeatedly transmitted PDCCHs may have different payloads but the same scheduling information. For the PDSCH, the coded bits may be different, but the information bits may be the same. When the RVs are different, it may be advantageous to limit the current case to a case such as BW1 Method 1-1. Although the PDCCH is completely received with a single reception, if the purpose is to improve reception performance through repeated reception due to issues such as reception channel performance, it is advantageous to improve reception performance when the transmitted coded bits are the same.

[BW1 Method 2-3] Method of configuring the number of repeated transmission and reception as field in DCI

When the number of repeated transmission and reception is dynamically indicated through DCI, a field related to the number of repeated transmission and reception in the DCI may need to be configured in addition to BW1 Method 2-2. PDSCH repetition in the current standard may be indicated by higher layer parameter *pdsch-AggregationFactor* or dynamically indicated by *repetitionNumber* in the TDRA configured by *PDSCH-TimeDomainResourceAllocation*. However, for Type0-PDCCH and SIB1 PDSCH, repeated transmission may not be instructed through this method because it is before RRC is configured. Therefore, a field indicating the number of repeated transmissions and receptions may be added to DCI format 1_0 with a CRC scrambled with an SI-RNTI.

When the number of repeated transmission and reception is indicated through DCI, the remaining number of repeated transmission and reception may be indicated through a field in the DCI. When it is repeated N times, a field may indicate N when first DCI is detected, and the number of repetitions may decrease by one like N-1 when second DCI is detected. However, the number of repeated transmission and reception indicated via DCI may be limited to a specific case such as BW1 Method 1-1. Otherwise, initial DCI detection may fail, resulting in the number of repeated transmissions not being known at once.

The corresponding field may include 2 bits, for example. Values of 0, 1, 2, and 3 may be indicated with 2 bits. If there are 4 repeated transmissions, the first DCI may indicate 3 to indicate that the number of remaining repeated transmissions of DCI is 3. The last DCI may be indicated to 0 to indicate that it is the last DCI in a repeated transmission.

**[BW1 Method 3] Repeated transmission method of Type0-PDCCH and PDSCH of BS**

In the current standard, SIB1 may be transmitted at a cycle of 160 ms based on a multiplexing pattern 1 of an SSB and CORESET#0. The SIB1 may be transmitted repeatedly within a period of 160 ms according to network implementation, but a default repetition period is 20 ms. CORESET#0 is located in 2 consecutive slots in every odd/even frame. In general, a UE connecting initially may expect a repeated transmission period of the SIB1 to be 20 ms. In the current standard, it may mean repeated transmission of the same information in the SIB1 within a period of 160 ms, and the repeated transmission proposed in the present embodiment may mean repeating the same transmission only at a specific location to improve SIB1 reception performance. Therefore, to distinguish between repeated transmissions in the current standard and repeated transmission in the present embodiment, the repeated transmissions may be referred to as first repetitive transmission and second repetitive transmission, respectively. In the present disclosure, unless specifically distinguished or without distinction, it is not difficult to understand, repeated transmission means the second repeat transmission.

[BW1 Method 3-1] Repeated transmission in consecutive slots in frame

An MO of Type0-PDCCH CSS set may be configured for every even/odd frame and may be located in 2 consecutive slots within one frame. Therefore, repeated transmissions in two consecutive slots within one frame may be considered. For example, in FIG. 13, it may be said that PDCCH#1/PDSCH#1 is transmitted in slot m and PDCCH#2/PDSCH#2 is transmitted in slot m+1.

FIG. 14 illustrates an example of repeated transmission in consecutive clots in a frame.

It may be said that correlated MOs are configured in consecutive slots in every P-th even/odd frame. In this case, when N means the number of PDCCHs that are repeatedly transmitted, N may be configured to 2, and when N means the number of frames in which repeated transmission is performed, N may be configured to 1.

Alternatively, it may be considered that an additional MO is configured in addition to an MO of the existing Type0-PDCCH CSS set only for frames in which repeated transmission is performed. In this case, in the example of FIG. 14 above, an MO that is capable of only monitoring a repeatedly transmitted PDCCH in slot m+2 and slot m+3 is configured and the related PDSCH may also be repeatedly transmitted.

BW1 Method 3-1 may be configured/applied in parallel to BW1 Method 3-2 and BW1 Method 3-3 below.

[BW1 Method 3-2] Repeated transmission in consecutive frames

An MO of a Type0-PDCCH CSS set may be configured for every even/odd frame, and thus it may be considered that only repeated transmission is performed in frames that are not configured. For example, when the MO is configured in frame 2n, an MO for repeated transmission only may be configured in frame 2n+1. This may be seen as a correlated MO being configured between frames, and the MO in frame 2n+1 may be considered to be an MO for repeated transmission of the PDCCH in the MO in frame 2n.

FIG. 15 illustrates an example of repeated transmission in consecutive frames.

For example, referring to FIG. 15, an MO may be configured and a PDCCH and an SIB 1 may be transmitted in even frame (frame 2n). In this case, frame 2n is a frame scheduled for repeated transmission, and thus the PDCCH and the SIB1 may be repeatedly transmitted in frame 2n+1 for a UE that requires improved reception performance.

As such, whether to repeat transmission in a frame immediately following the frame in which the MO of the Type0-PDCCH CSS set is configured may be determined according to P and N. For example, if P=4 and N=2 (N is the number of frames in which repeated transmission is performed) and Type0-PDCCH is transmitted in even frames, the Type0-PDCCH and the SIB 1 PDSCH are repeatedly transmitted in every fourth even frame and the immediately following frame (odd frame). It may be said that a BS repeatedly transmits the Type0-PDCCH and the SIB1 PDSCH in odd frames at specific intervals.

[BW1 Method 3-3] Repeated transmission consecutive even/odd frames

An MO of a Type0-PDCCH CSS set may be configured for every even/odd frame, and when SIB1 is transmitted for every even/odd frame, it may be said that it is repeatedly transmitted at a period of 20 ms. This means the first repeated transmission, which is repeated transmission of SIB1 of the same information within a period of 160 ms. The second repeat transmission may be configured in consecutive even/odd frames. In this case, the Type0-PDCCH is repeatedly transmitted in consecutive even/odd frames in which the second repeated transmission is configured, and the scheduled PDSCH has the same information, as well as the same frequency, and the number and location of symbols in the slot.
Referring back to FIG. 8, the diagram shows the second repeated transmission in which an MO is configured in an even frame. The PDCCH monitoring location and the frame in which the PDSCH is transmitted are the same as the first repeated transmission, but the information of the PDCCH and PDSCH, the slots and symbols in which the PDCCH and the PDSCH are located, and the like may be different. It may be said that Nth second repeated transmission is performed in every P-th even/odd frame, and the first repeated transmission is performed in other frames.
BW1 Method 3-3 has an advantage of allowing a UE to improve reception performance while maintaining the CORESET#0 configuration and the MO of the Type0-PDCCH CSS set in the current NR standard.

[BW1 Method 3-4] Mapping method of repeatedly transmitted PDCCH and PDSCH

The BS may apply different mappings to the repeatedly transmitted PDCCH and PDSCH. To receive a PDCCH and PDSCH exceeding the maximum transmission bandwidth of a UE, as in BW1 Method 4-1 below, it may be necessary to change the location of a reception bandwidth through RF retuning. Requiring of the UE for PDCCH and PDSCH reception may be disadvantageous in terms of reception performance, and the like. Therefore, the BS may transmit the PDCCH and the PDSCH without requiring RF retuning of the UE. To this end, the repeatedly transmitted PDCCH and PDSCH may have different PRB mappings. Whether or not mapping is changed during the repeated transmission may be notified together through BW1 Method 2-1.

**1) Repeatedly transmitted PDCCH and PDSCH may be mapped in reverse frequency order.**

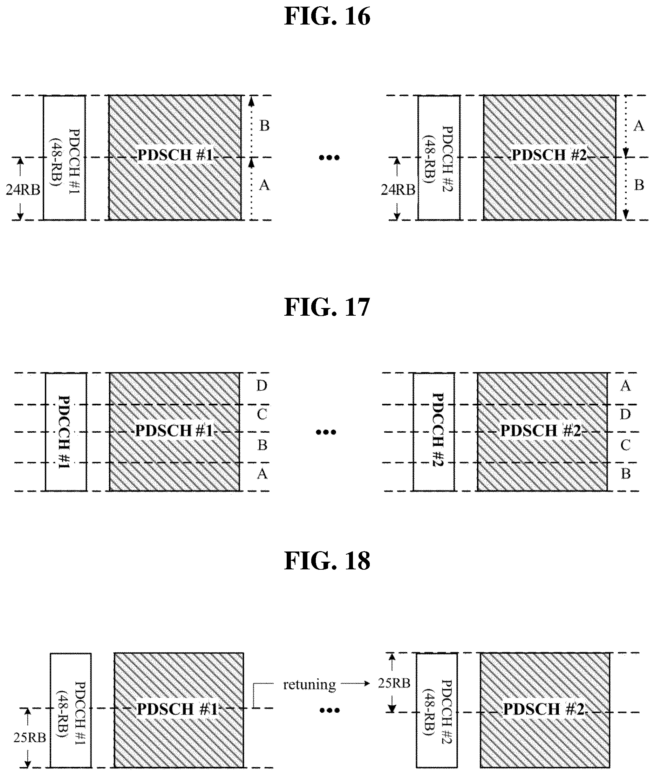

FIG. 16 is a diagram for explaining mapping of a reverse order of a repeatedly transmitted PDCCH and PDSCH.
The PRB mapping of the repeatedly transmitted PDCCH and PDSCH may be in the reverse order of the previous PDCCH and PDSCH. FIG. 16 shows an example of mapping of a frequency reverse order when transmitted twice in 15kHz SCS 48RB CORESET#0. It represents 24 RB of a reception bandwidth of the UE and is located at a lower end as described in BW1 Method 1-2. A and B represent the frequency domain of 24 RBs each out of the total 48 RBs, and arrows indicate a PRB mapping order (direction). That is, the PDCCH and the PDSCH are mapped sequentially starting from the lowest PRB index. In this case, the repeatedly transmitted PDCCH and PDSCH (PDCCH#2/PDSCH#2) are mapped in reverse order from PDCCH#1/PDSCH#1, starting from the highest PRB index. In this case, the UE may receive both A and B regions of the PDCCH and PDSCH while maintaining the location of the reception 24 RB bandwidth without retuning. Even if an actual UE receives from the upper 24RB rather than the lower 24RB, the actual UE may fully receive the PDCCH and PDSCH through repeated reception.
For an SCS of 30 kHz, the maximum bandwidth is 11 RB, and thus it may be located within a bandwidth of 12 RB, which is half of 24 RB, and a detailed location is at the discretion of the terminal or it may be advantageous to be located at the lower end.
This mapping may be applied for up to two repeated transmissions.

**2) PDCCH/PDSCH may be divided and the location thereof may be changed for each repeated transmission.**

FIG. 17 is a diagram for explaining mapping shifting of a repeatedly transmitted PDCCH and PDSCH.
The frequency domain of the repeatedly transmitted PDCCH/PDSCH may be divided and shifted each time it is repeatedly transmitted. PRB mapped PDCCH#1/PDSCH#1 (the PDCCH and PDSCH with the earliest time in case of repeated transmission) may be divided according to a reception bandwidth of a UE (11 RB at 30 kHz and 24 RB at 15 kHz) and the divided region may be shifted for each repeated transmission.
FIG. 17 shows the shifted mapping when repeatedly transmitted in 30 kHz SCS 48RB (or 15kHz SCS 96RB) CORESET#0. That is, the diagram shows an example in which four repeated receptions are required for a UE to fully receive a Type0-PDCCH and an SIB1 PDSCH. As shown in FIG. 17, it may be divided into four regions and a UE operation that receives one region for each repeated reception may be assumed. That is, the UE may receive regions A, B, C, and D sequentially with four repeated receptions.

As another example, in FIG. 16, the frequency domain may be mapped by dividing the frequency domain into upper and lower halves without frequency reverse mapping. That is, if the lower region is A and the upper region is B during the first transmission, the lower region may be B and the upper region may be A during the repeated transmission. The UE may receive a complete PDCCH only by repeated reception without RF retuning in the lower (or upper) region.

### [BW1 Method 4] Repeated reception method of Type0-PDCCH and PDSCH of UE

According to the current standard, a UE may obtain an MIB and know information of CORESET#0 and information Type0-PDCCH CSS set through pdcch-configSIB 1 information. Through this, Type0-PDCCH CSS set is monitored in 2 consecutive slots for every odd/even frame and DCI format 1_0 with CRC scrambled by SI-RNTI is received.

#### [BW1 Method 4-1] Repeated reception through RF retuning

FIG. 18 is a diagram for explaining repeated reception through RF retuning.

Through BW1 Method 2-1, the UE may know whether a cell the UE accesses supports repeated transmission, a period and number of repeated transmissions, and the like. The UE may also know whether RF retuning is needed in the corresponding cell.

A PDCCH and a PDSCH are received according to an MO of Type0-PDCCH set and are punctured and received when the maximum transmission bandwidth of the UE is exceeded. In this case, it may be advantageous in terms of reception performance to align the location of the location of an initial reception bandwidth of the UE with the lowest PRB index. As in FIG. 18, which is an example of CORESET#0 configuration with 48 PB of 15 kHz, the UE receives PDCCH#1 and PDSCH#1 only in a region of 25 RB.

When the received PDCCH and PDSCH are repeatedly transmitted, the UE may, at its discretion, decode the currently received PDCCH and, if it fails, expect subsequent repeated reception, or may not attempt decoding and expect repeated reception. The UE buffers the received region of PDCCH#1/PDSCH#1 for repeated reception.

Then, the UE performs RF retuning for repeated reception. Repeatedly transmitted PDCCH#2/PDSCH#2 are received after RF retuning. This corresponds to reception of 25 RB of PDCCH#2/PDSCH#2 in FIG. 18.

Referring to the example of FIG. 18, when the UE receives PDCCH#1/PDSCH#1, the UE may fully receive two PDCCH candidates of AL4, one candidate of AL8, and half of a candidate of AL16. The UE may attempt to decode the corresponding PDCCH candidates and, if unsuccessful, perform a repeated reception operation including RF retuning.

#### [BW1 Method 4-2] Repeated reception without RF retuning

When a UE supports BW1 Method 3-4 in a cell through BW1 Method 2-1, RF retuning may not be required for repeated reception by the UE. In this case, the UE may perform repeated reception identical to BW1 Method 4-1, but without RF retuning.

### [BW1 Method 5] Method of supporting interleaving for CORESET#0 to be newly configured

The RB of CORESET#0 to be configured for a UE with a reduced bandwidth may be smaller than definition in the current standard. For example, for a UE with a bandwidth reduced from 30 kHz SCS to 5 MHz, CORESET#0 with 6 RB and 3 symbols may be configured. This may be because the maximum transmission of BW of 5 MHz is 11 PRB, and CORESET may be configured in units of 6RB, and thus only a maximum of 6 RB CORESET may be configured within 11 PRB. This allows the maximum number of symbols to be configured to 3 to allocate as many REGs as possible within CORESET#0.

In the case of CORESET#0 with an RB smaller than the current possible CORESET#0 RB (e.g. 24, 48, or 96 RB), it may be difficult to configure the interleaving defined in the current standard. Table 11 below shows the configuration of CORESET extracted from TS38.211.

[Table 11]

| |
|---|
| 7.3.2.2 Control-resource set (CORESET) |
| A control-resource set consists of $N_{\mathrm{RB}}^{\mathrm{CORESET}}$ resource blocks in the frequency domain and |
| $N_{\mathrm{symb}}^{\mathrm{CORESET}} \in \{1,2,3\}$ symbols in the time domain. |

A control-channel element consists of 6 resource-element groups (REGs) where a resource-element group equals one resource block during one OFDM symbol. Resource-element groups within a control-resource set are numbered in increasing order in a time-first manner, starting with 0 for the first OFDM symbol and the lowest-numbered resource block in the control resource set.

A UE can be configured with multiple control-resource sets. Each control-resource set is associated with one CCE-to-REG mapping only.

The CCE-to-REG mapping for a control-resource set can be interleaved or non-interleaved and is described by REG bundles:

- REG bundle i is defined as REGs $\{iL, iL + 1, ..., iL + L - 1\}$ where $L$ is the REG bundle size,

$$i = 0, 1, ..., N_{REG}^{CORESET}/L - 1$$, and

$$N_{REG}^{CORESET} = N_{RB}^{CORESET} N_{symb}^{CORESET}$$ is the number of REGs in the CORESET

- CCE $j$ consists of REG bundles $\{f(6j/L), f(6j/L + 1), ..., f(6j/L + 6/L - 1)\}$ where $f(\cdot)$ is an interleaver

For non-interleaved CCE-to-REG mapping, $L = 6$ and $f(x) = x$.

For interleaved CCE-to-REG mapping, $L \in \{2,6\}$ for

$$N_{symb}^{CORESET} = 1$$ and $L \in \{N_{symb}^{CORESET}, 6\}$ for

$$N_{symb}^{CORESET} \in \{2,3\}$$. The interleaver is defined by

$$f(x) = (rC + c + n_{shift}) \bmod (N_{REG}^{CORESET}/L)$$

$$x = cR + r$$
$$r = 0,1,...,R - 1$$
$$c = 0,1,...,C - 1$$
$$C = N_{REG}^{CORESET}/(LR)$$

where $R \in \{2,3,6\}$.

The UE is not expected to handle configurations resulting in the quantity $C$ not being an integer.

For a CORESET configured by the *ControlResourceSet* IE:

- $N_{RB}^{CORESET}$ is given by the higher-layer parameter *frequencyDomainResources;*

- $N_{symb}^{CORESET}$ is given by the higher-layer parameter *duration,* where $N_{symb}^{CORESET} = 3$ is supported only if the higher-layer parameter *dmrs-TypeA-Position* equals 3;

- interleaved or non-interleaved mapping is given by the higher-layer parameter *cce-*

(continued)

- *L* equals 6 for non-interleaved mapping and is given by the higher-layer parameter *reg-BundleSize* for interleaved mapping;

- *R* is given by the higher-layer parameter *interleaverSize;*

- $n_{\text{shift}} \in \{0,1, ...,274\}$ is given by the higher-layer parameter *shiftIndex* if provided, otherwise $n_{\text{shift}} = N_{\text{ID}}^{\text{cell}}$;

- for both interleaved and non-interleaved mapping, the UE may assume

> - the same precoding being used within a REG bundle if the higher-layer parameter *precoderGranularity* equals *sameAsREG-bundle;*
>
> - the same precoding being used across the all resource-element groups within the set of contiguous resource blocks in the CORESET, and that no resource elements in the CORESET overlap with an SSB or LTE cell-specific reference signals as indicated by the higher-layer parameter *lte-CRS-ToMatchAround, lte-CRS-PatternList1,* or *lte-CRS-PatternList2,* if the higher-layer parameter *precoderGranularity* equals *allContiguousRBs.*
>
> For CORESET 0 configured by the *ControlResourceSetZero* IE:

- $N_{\text{RB}}^{\text{CORESET}}$ and $N_{\text{symb}}^{\text{CORESET}}$ are defined by clause 13 of [5, TS 38.213];

- the UE may assume interleaved mapping

- *L* = 6;

- *R* = 2;

- $n_{\text{shift}} = N_{\text{ID}}^{\text{cell}}$;

- the UE may assume normal cyclic prefix when CORESET 0 is configured by MIB or SIB1;

> - the UE may assume the same precoding being used within a REG bundle.

When CORESET is configured to interleaving, the number of REG $N_{\text{REG}}^{\text{CORESET}}$ needs to be divided by a product of an REG bundle size (L) and an interleaver size (R). In other words, C=($N_{\text{REG}}^{\text{CORESET}}$)((LR)) needs to be an integer, and C that is not an integer is not expected. For CORESET#0, L=6 and R=2 are determined, and thus $N_{\text{REG}}^{\text{CORESET}}$ needs to be a multiple of 12.

However, in the case of 6 RB 3symbol CORESET#0 as in the example above, $N_{\text{PEG}}^{\text{CORESET}}$ =18, and thus it is not a multiple of 12 and therefore interleaving may not be applied. Accordingly, methods may be proposed to apply interleaving to CORESET#0 in which $N_{\text{REG}}^{\text{CORESET}}$ is not a multiple of L*R.

[BW1 Method 5-1] Apply non-interleaved mapping

When $N_{\text{REG}}^{\text{CORESET}}$ is not a multiple of L*R, a UE may assume that the corresponding CORESET#0 has non-interleaved mapping applied. An exception may be made in which interleaving is not applied when $N_{\text{REG}}^{\text{CORESET}}$ is not a multiple of L*R for CORESET#0 configuration in which interleaving is generally always assumed.

[BW1 Method 5-2] L*R is configured to be one of divisors of $N_{\text{REG}}^{\text{CORESET}}$ other than 1.

When $N_{\text{REG}}^{\text{CORESET}}$ is not a multiple of 12, the determined REG bundle size (L) and interleaver size (R) of CORESET#0 may be configured to have a different value than before. As seen from Table 4 above, L may be configured to one of two values from among 2, 3, and 6 as a candidate depending on the number of symbols, and R may be selected to one of values from among 2, 3, and 6. Thus, depending on a value of $N_{\text{REG}}^{\text{CORESET}}$, L*R may be selected to be one of divisors of $N_{\text{REG}}^{\text{CORESET}}$.

L*R may be predetermined to a specific value depending on a value of $N_{\text{REG}}^{\text{CORESET}}$. For example, if $N_{\text{REG}}^{\text{CORESET}}$ =18, L*R may have a value of 6 or 9. Accordingly, the L and R values may each be determined.

Alternatively, the values may be predetermined according to a special rule. For example, a value of L*R may be first determined as the greatest non-divisor value of $N_{\text{REG}}^{\text{CORESET}}$. Accordingly, the values of L and R may be configured to one of candidates to be selected based on the determined L*R value. If $N_{\text{REG}}^{\text{CORESET}}$ =18, L*R=9, and L and R need to each be 3.

Such predetermined values may be defined in a standard or made known to a UE through a MIB.

[BW1 Method 5-31 Assume and apply new interleaving

When $N_{REG}^{CORESET}$ is not a multiple of 12, new interleaving may be defined and applied based on the interleaving principles of the current standard. CORESET#0 has an interleaver size (R) configured to 2. For commonly applied CORESET#0, when the interleaver size (R) is 2, new interleaving may be assumed by referring to how PRB mapping of an actual CORESET is performed.

Interleaving is performed in REG bundle units, and in CORESET#0, the REG bundle size is 6. Therefore, six REGs form one REG bundle, and each REG bundle may be mapped to a PRB. In the case of non-interleaved, PRB mapping is performed sequentially with symbol mapping first. In other words, one REG bundle is mapped sequentially from a first symbol in PRB#0, which is the lowest PRB index in CORESET. For example, if CORESET#0 has 3 symbols, a total of 6 REGs with 2 RB and 3 symbols are configured as one REG bundle and are first mapped to PRB#0 and PRB#1, and the second REG bundle is mapped to PRB#2 and PRB#3 in that order.

When the interleaver size (R) is 2, the REG bundles within the CORESET are generally mapped as follows. The entire RB configured in CORESET is divided in half, and REG bundles are mapped alternately to the lower half and upper half. In other words, the first REG bundle is mapped from PRB#0, and the second REG bundle is mapped from PRB# ($N_{RB}/2$ - 1). Then, the second REG bundle may be mapped after the first REG bundle.

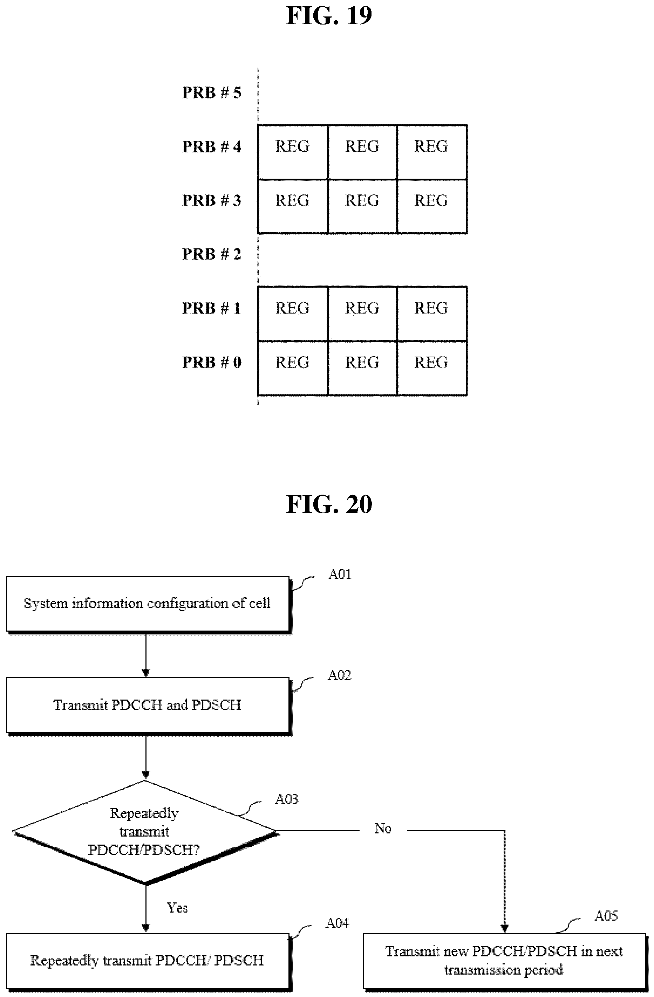

Accordingly, even if interleaving is not applied because $N_{REG}^{CORESET}$ is not a multiple of 12, the principle of applying interleaving may be referenced. For example, in the case of CORESET#0 of 6 RB 3symbol, it may be considered that PRB mapping is performed as in FIG. 19.

In FIG. 19, REG bundle #0 may be mapped to PRB#0 and PRB#1, and REG bundle #1 may be mapped to PRB#3 and PRB#4. Two REG bundles may form CCE AL2.

In other words, interleaving, which divides the entire RB region of CORESET#0 in half and alternately maps REG bundles to the lower half and upper half.

In general, CORESET interleaving may be understood as dividing the entire RB region by the interleaver size and sequentially mapping REG bundles to the divided RB regions with PRBs. In other words, the RB region of CORESET is divided into R, REG bundle #0 is the first RB region, REG bundle #1 is the second RB region, ..., REG bundle #n is the PRB mapping to the (n mod R)-th RB region.

In the above, methods by which a BS and a UE with limited (or reduced) bandwidth may repeatedly transmit and receive Type0-PDCCH and SIB1 PDSCH are proposed. This allows UEs including a Rel-18 RedCap UE to follow a configuration of the existing NR standard without change despite a bandwidth being limited, and preserve the reception performance degraded due to the reduced capability.

FIG. 20 shows an example of an operation sequence in which a BS repeatedly transmits a PDCCH and a PDSCH such that a RedCap UE may receive a PDCCH and a PDSCH shared with an existing UE with higher performance. Referring to FIG. 20, the BS configures system information of a cell (A01). Cell system information may include whether a PDCCH and a PDSCH are repeatedly transmitted, a repeated transmission period, and mapping information. This information may be reported to the UE through an MIB. The BS transmits a PDCCH and a PDSCH according to a configured period (A02). The BS determines whether to repeatedly transmit the PDCCH and the PDSCH (A03). This may be a result of the preconfigured repeated transmission period and number of times. When repeated transmission is required, the BS repeatedly transmits the PDCCH and the PDSCH (A04). If repeated transmission is not required, the BS transmits the PDCCH and the PDSCH in a next transmission period (A05). A next transmission period in this case may the result of an MO of the Type0-PDCCH CSS set.

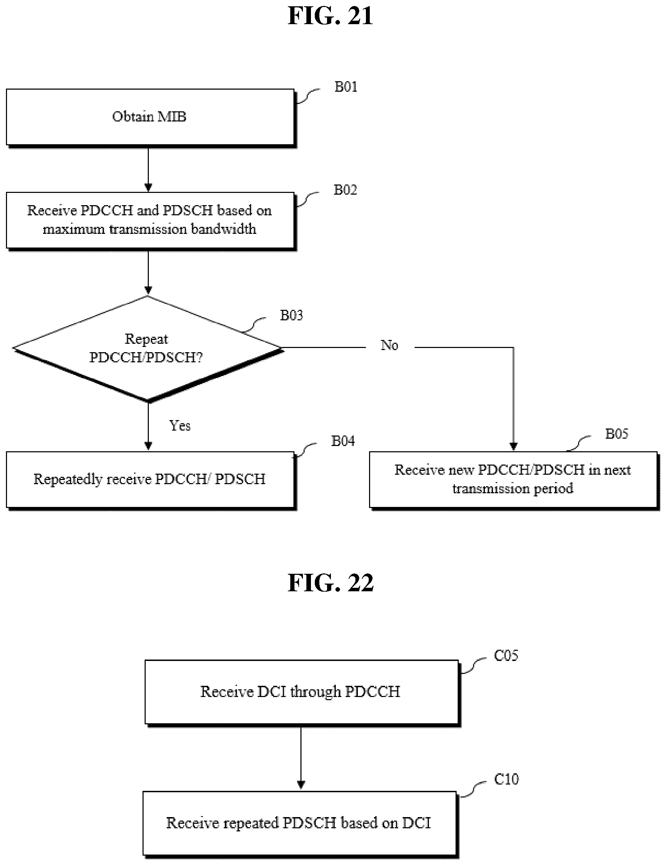

FIG. 21 shows an example of an operation sequence in which a PDCCH and a PDSCH are repeatedly received such that a RedCap UE may receive a PDCCH and a PDSCH shared with an existing UE with higher performance. Referring to FIG. 21, a UE receives an SSB and obtains an MIB (B01). The MIB may include information such as whether the PDCCH and the PDSCH are repeatedly transmitted in a corresponding cell, a repeated transmission period, and mapping information. The UE receives a PDCCH and a PDSCH according to a configured period (B02). The UE determines whether the received PDCCH and PDSCH may be repeatedly received (B03). Whether or not repeated reception occurs in this case may depend on the determined repeated transmission period and number of times. When the PDCCH and the PDSCH are repeatedly received, the UE repeatedly receives the PDCCH and the PDSCH (B04). Through this, reception performance may be improved by decoding the repeatedly received PDCCH and checking scheduling information of the buffered PDSCH. If the PDCCH and the PDSCH are not repeatedly received, the UE receives a new PDCCH and PDSCH in a next period (B05).

According to the present embodiment, a Rel-18 RedCap UE with a reduced bandwidth may preserve degraded reception performance by repeatedly receiving a PDCCH and PDSCH exceeding a reception bandwidth. RF retuning may not be required even when the PDCCH and PDSCH exceeding a bandwidth are received during repeated reception.

Through this, a Type0-PDCCH and an SIB1 PDSCH may be smoothly received in a pre-RRC connection stage even without configuring a separate PDSCH or initial DL BWP for a Rel-18 RedCap UE.

FIG. 22 is a diagram for explaining an operation of a UE according to an embodiment.

Referring to FIG. 22, the UE receives downlink control information (DCI) through a physical downlink control channel (PDCCH) (C05).

The UE may receive a physical downlink shared channel (PDSCH) that is repeated in the time domain based on the DCI (C10).

Based on the PDSCH scheduled by the DCI exceeding a PDSCH bandwidth supported by the UE, the UE may alternately receive different portions of the PDSCH for each repetition of the PDSCH.

From among a first type reduced capability (RedCap) UE supporting the same size bandwidth for the PDCCH and the PDSCH, and a second type RedCap UE supporting different size bandwidths, the UE may be the second type RedCap UE.

The UE may receive the PDSCH by changing the location of a baseband (BB) for each repetition of the PDSCH.

For each repetition of the PDSCH, a radio frequency (RF) band may be maintained the same.

The DCI may include information about the number of repetitions of the PDSCH.

The DCI is provided for each repetition of the PDSCH, and information on the number of repetitions of the PDSCH may be related to the number of remaining repetitions.

The PDSCH may include a first system information block (SIB).

A PDSCH bandwidth of the UE that can be received for each repetition of the PDSCH, may be 5 MHz or less.

The PDCCH carrying the DCI may be repeated multiple times in the time domain.

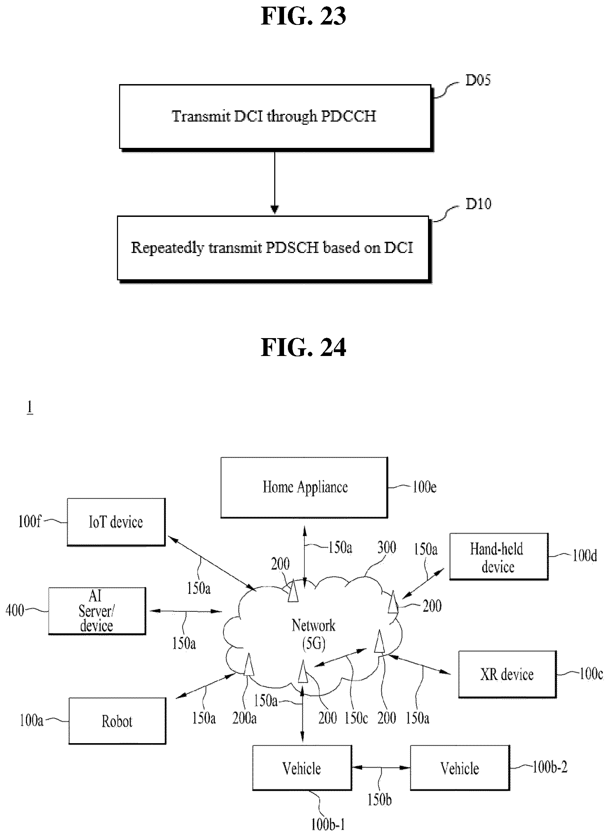

FIG. 23 is a diagram for explaining an operation of a BS according to an embodiment.

Referring to FIG. 23, the BS transmits downlink control information (DCI) through a physical downlink control channel (PDCCH) (D05).

The BS may receive a physical downlink shared channel (PDSCH) to a UE based on the DCI (D10). The BS may repeatedly transmit the PDSCH in the time domain based on that the UE receiving the PDSCH includes a second reduced capability (RedCap) UE supporting different size bandwidths for the PDCCH and the PDSCH and that the PDSCH scheduled by the DCI exceeds a PDSCH bandwidth supported by the second type RedCap UE. The UE receiving the PDSCH may include a first type RedCap UE supporting the same size bandwidth for the PDCCH and the PDSCH.

The DCI may include information about the number of repetitions of the PDSCH.

The DCI is provided for each repetition of the PDSCH, and information on the number of repetitions of the PDSCH may be related to the number of remaining repetitions.

The PDSCH may include a first system information block (SIB).

A PDSCH bandwidth of the second type of RedCap UE that can be received for each repetition of the PDSCH, may be 5 MHz or less.

The PDCCH carrying the DCI may be repeated multiple times in the time domain.

FIG. 24 illustrates a communication system 1 applied to the present disclosure.

Referring to FIG. 24, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

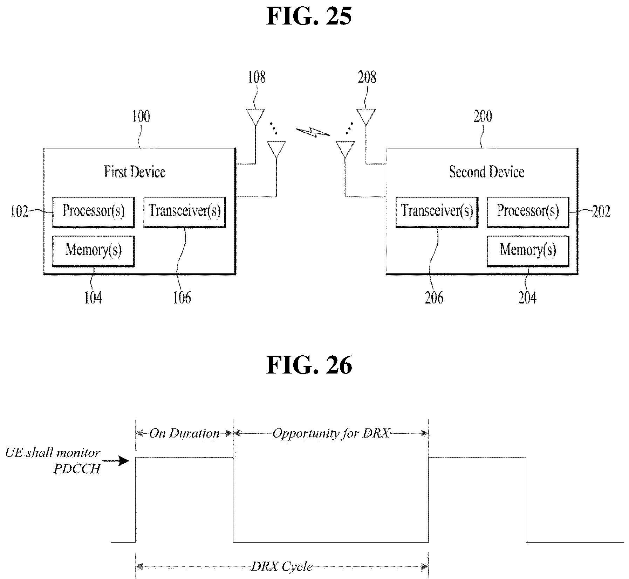

FIG. 25 illustrates wireless devices applicable to the present disclosure.

Referring to FIG. 25, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 24.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 26 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

A DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the aforedescribed/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

The above-described embodiments are combinations of elements and features of the present disclosure in specific forms. The elements or features may be considered selective unless mentioned otherwise. Each element or feature may be implemented without being combined with other elements or features. Further, the embodiments of the present disclosure may be configured by combining some elements and/or some features. Operation orders described in the embodiments of the present disclosure may be rearranged. Some constructions or features of any one embodiment may be included in another embodiment or may be replaced with corresponding constructions or features of another embodiment. It is obvious that claims that are not explicitly cited in the appended claims may be presented in combination as an embodiment of the present disclosure or included as a new claim by subsequent amendment after the application is filed.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method of receiving a signal by a user equipment (UE) in a wireless communication system, the method comprising:

   receiving downlink control information (DCI) through a physical downlink control channel (PDCCH); and
   receiving a physical downlink shared channel (PDSCH) that is repeated in a time domain based on the DCI,
   wherein, based on the PDSCH scheduled by the DCI exceeding a PDSCH bandwidth supported by the UE, the UE alternately receives different portions of the PDSCH for each repetition of the PDSCH.

2. The method of claim 1, wherein, from among a first type reduced capability (RedCap) UE supporting a same size bandwidth for the PDCCH and the PDSCH, and a second type RedCap UE supporting different size bandwidths, the UE is the second type RedCap UE.

3. The method of claim 1, wherein the UE receives the PDSCH by changing a location of a baseband (BB) for each repetition of the PDSCH.

4. The method of claim 3, wherein, for each repetition of the PDSCH, a radio frequency (RF) band is maintained the same.

5. The method of claim 1, wherein the DCI includes information about a number of repetitions of the PDSCH.

6. The method of claim 5, wherein the DCI is provided for each repetition of the PDSCH, and
   wherein information regarding a number of repetitions of the PDSCH is related to a number of remaining repetitions.

7. The method of claim 1, wherein the PDSCH includes a first system information block (SIB).

8. The method of claim 1, wherein a PDSCH bandwidth of the UE that can be received for each repetition of the PDSCH, is 5 MHz or less.

9. The method of claim 1, wherein the PDCCH carrying the DCI is repeated multiple times in the time domain.

10. A computer-readable recording medium having recorded thereon instructions for performing the method of claim 1.

11. A device for wireless communication, the device comprising:

a memory configured to store instructions; and
a processor configured to perform operations by executing the instructions,
wherein the operations of the processor include:

receiving downlink control information (DCI) through a physical downlink control channel (PDCCH); and
receiving a physical downlink shared channel (PDSCH) that is repeated in a time domain based on the DCI, and
wherein, based on the PDSCH scheduled by the DCI exceeding a PDSCH bandwidth supported by the UE, the UE alternately receives different portions of the PDSCH for each repetition of the PDSCH.

12. The device of claim 11, further comprising:

a transceiver configured to transmit or receive a signal under control of the processor,
wherein the device is a user equipment (UE) operating in a wireless communication system.

13. The method of claim 11, wherein the device is an application specific processor (ASIC) or digital signal processing device configured to control a user equipment (UE) operating in a wireless communication system.

14. A method of transmitting a signal by a base station (BS) in a wireless communication system, the method comprising:

transmitting downlink control information (DCI) through a physical downlink control channel (PDCCH); and
transmitting a physical downlink shared channel (PDSCH) to a user equipment (UE) based on the DCI,
wherein the BS repeatedly transmits the PDSCH in a time domain based on that the UE receiving the PDSCH includes a reduced capability (RedCap) UE supporting different size bandwidths for the PDCCH and the PDSCH and that the PDSCH scheduled by the DCI exceeds a PDSCH bandwidth supported by the RedCap UE.

15. A base station (BS) for wireless communication, the BS comprising:

a memory configured to store instructions; and
a processor configured to perform operations by executing the instructions,
wherein the operations of the processor include:

transmitting downlink control information (DCI) through a physical downlink control channel (PDCCH); and
transmitting a physical downlink shared channel (PDSCH) to the UE based on the DCI, and
wherein, the processor repeatedly transmits the PDSCH in a time domain based on that the UE receiving the PDSCH includes a reduced capability (RedCap) UE supporting different size bandwidths for the PDCCH and the PDSCH and that the PDSCH scheduled by the DCI exceeds a PDSCH bandwidth supported by the RedCap UE.

# FIG. 1

| Initial Cell Search | System Information Reception | Random Access Procedure | General DL/UL Tx/Rx S18 |

PSS/SSS & [DLRS] & PBCH — S11
PDCCH/ PDSCH (BCCH) — S12
PRACH — S13
PDCCH/ PDSCH — S14
PRACH — S15
PDCCH/ PDSCH — S16
PDCCH/ PDSCH — S17
PUSCH/ PUCCH

- DL/UL ACK/NACK
- UE CQI/PMI/Rank Report using PUSCH and PUCCH

# FIG. 2

One Frame (10ms)

Half-Frame (5ms)　　Half-Frame (5ms)

Subframe 0 (1ms)　Subframe 4 (1ms)　Subframe 5 (1ms)　Subframe 9 (1ms)

Subframe (1ms)

15KHz　Slot (14 symbols)　1ms

30KHz　Slot 0 (14 symbols)　Slot 1　500us

60KHz　Slot 0 (14 symbols)　Slot 1　Slot 2　Slot 3　250us

120KHz　Slot 0 (14 symbols)　Slot 1　Slot 2　Slot 3　Slot 4　Slot 5　Slot 6　Slot 7　125us

# FIG. 3

# FIG. 4

UE

BS

1701     Msg1 : random access preamble

1703     Msg2 : random access response

1705     Msg3 : scheduled transmission on PUSCH

1707     Msg4 : contention resolution

( a )

Msg. 2 : RA response     Msg. 4 : RRC connection setup

BS

No response    No response    ...

Power Ramping    Power Ramping    ...

UE

Msg. 1

Msg. 3 : RRC connecion Request

RRC connectecd

( b )

# FIG. 5

One slot

f
t

# FIG. 6

PDCCH

PDSCH #1   PDSCH #2   PDSCH #3   PDSCH #4

Slot n        Slot n + 1      Slot n + 2      Slot n + 3

# FIG. 7

Frame 2n

PDCCH #1   PDSCH#1   PDCCH #2   PDSCH#2

Slot m                    Slot m + 1

# FIG. 8

Frame 2n

Frame 2n+2

PDCCH #1 | PDSCH #1 | ••• | PDCCH #2 | PDSCH #2

Slot m or m +1

Slot m or m +1

# FIG. 9

PDSCH #1 — D / C / B / A  ••• PDSCH #2 — D / C / B / A  ••• PDSCH #3 — D / C / B / A  ••• PDSCH #4 — D / C / B / A

# FIG. 10

PDCCH #1 | PDSCH#1 | ••• | PDCCH #2 | PDSCH#2 | ••• | PDCCH #3 | PDSCH#3 | ••• | PDCCH #4 | PDSCH#4

# FIG. 11

System information configuration of cell — FG601

Transmit PDCCH and PDSCH — FG602

Repeatedly transmit previous PDSCH? — FG603

No

Yes

Repeatedly transmit PDSCH (and PDCCH) — FG604

Transmit new PDSCH (and PDCCH) in next transmission period — FG605

# FIG. 12

Obtain MIB — FG701

Receive PDCCH and PDSCH based on maximum transmission bandwidth — FG702

Repeat PDSCH? — FG703

No

Yes

Repeatedly receive PDSCH (and PDCCH) — FG704

Receive new PDCCH and PDSCH in next transmission period — FG705

## FIG. 13

PDCCH #1  PDSCH #1  •••  PDCCH #2  PDSCH #2

## FIG. 14

PDCCH #1  PDSCH#1  PDCCH #2  PDSCH#2

Slot m  Slot m + 1

## FIG. 15

Frame 2n  Frame 2n+1

PDCCH #1  PDSCH #1  •••  PDCCH #2  PDSCH #2

Slot m or m + 1  Slot m or m + 1

# FIG. 16

# FIG. 17

# FIG. 18

# FIG. 19

PRB # 5

| | | | |
|---|---|---|---|
| PRB # 4 | REG | REG | REG |
| PRB # 3 | REG | REG | REG |

PRB # 2

| | | | |
|---|---|---|---|
| PRB # 1 | REG | REG | REG |
| PRB # 0 | REG | REG | REG |

# FIG. 20

```
┌─────────────────────────────────────┐
│  System information configuration of cell  │ ⌐ A01
└─────────────────────────────────────┘
                    │
                    ▼
┌─────────────────────────────────────┐
│       Transmit PDCCH and PDSCH         │ ⌐ A02
└─────────────────────────────────────┘
                    │
                    ▼
              ◇ A03
        ╱  Repeatedly  ╲
       ╱   transmit      ╲──────── No ────────┐
       ╲  PDCCH/PDSCH?   ╱                     │
        ╲              ╱                       │
             │ Yes                             ▼
             ▼                      ⌐ A05
   ┌──────────────────────┐ ⌐ A04  ┌────────────────────────────────┐
   │ Repeatedly transmit    │       │ Transmit new PDCCH/PDSCH in next │
   │ PDCCH/ PDSCH           │       │      transmission period          │
   └──────────────────────┘       └────────────────────────────────┘
```

# FIG. 21

B01

Obtain MIB

B02

Receive PDCCH and PDSCH based on
maximum transmission bandwidth

B03

Repeat
PDCCH/PDSCH? — No

Yes

B04

Repeatedly receive PDCCH/ PDSCH

B05

Receive new PDCCH/PDSCH in next
transmission period

# FIG. 22

C05

Receive DCI through PDCCH

C10

Receive repeated PDSCH based on DCI

# FIG. 23

Transmit DCI through PDCCH — D05

↓

Repeatedly transmit PDSCH based on DCI — D10

# FIG. 24

<u>1</u>

# FIG. 25

# FIG. 26

EP 4 572 489 A1

# INTERNATIONAL SEARCH REPORT

International application No.

**PCT/KR2023/095041**

## A. CLASSIFICATION OF SUBJECT MATTER

**H04W 72/12**(2009.01)i; **H04W 72/23**(2023.01)i; **H04W 48/08**(2009.01)i; **H04L 1/08**(2006.01)i; **H04W 72/04**(2009.01)i

According to International Patent Classification (IPC) or to both national classification and IPC

## B. FIELDS SEARCHED

Minimum documentation searched (classification system followed by classification symbols)

H04W 72/12(2009.01); H04L 1/00(2006.01); H04L 5/00(2006.01); H04W 52/02(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDSCH, PDCCH, DCI, RedCap, bandwidth, SIB, time domain

## C. DOCUMENTS CONSIDERED TO BE RELEVANT

| Category* | Citation of document, with indication, where appropriate, of the relevant passages | Relevant to claim No. |
|---|---|---|
| A | WO 2022-155488 A1 (INTEL CORPORATION) 21 July 2022 (2022-07-21)<br>See page 3, line 34 - page 4, line 21; and claim 1. | 1-15 |
| A | US 2020-0413335 A1 (ASUSTEK COMPUTER INC.) 31 December 2020 (2020-12-31)<br>See paragraph [0047]; and claims 4 and 7. | 1-15 |
| A | ZTE. UE complexity reduction for reduced capability NR devices. R1-2100564, 3GPP TSG RAN WG1 #104-e, e-Meeting. 18 January 2021.<br>See sections 2-7. | 1-15 |
| A | WO 2022-140450 A1 (OFINNO, LLC et al.) 30 June 2022 (2022-06-30)<br>See paragraphs [0301]-[0306]; and figure 24. | 1-15 |
| A | US 2021-0037573 A1 (QUALCOMM INCORPORATED) 04 February 2021 (2021-02-04)<br>See paragraphs [0063]-[0075]; and figure 7. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 November 2023** | **22 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

49

**INTERNATIONAL SEARCH REPORT**
Information on patent family members

International application No.

**PCT/KR2023/095041**

| Patent document cited in search report | | | Publication date (day/month/year) | Patent family member(s) | | | Publication date (day/month/year) |
|---|---|---|---|---|---|---|---|
| WO | 2022-155488 | A1 | 21 July 2022 | None | | | |
| US | 2020-0413335 | A1 | 31 December 2020 | CN | 110784914 | A | 11 February 2020 |
| | | | | CN | 110784914 | B | 18 July 2023 |
| | | | | EP | 3599733 | A1 | 29 January 2020 |
| | | | | JP | 2020-022159 | A | 06 February 2020 |
| | | | | JP | 6913129 | B2 | 04 August 2021 |
| | | | | KR | 10-2020-0012733 | A | 05 February 2020 |
| | | | | KR | 10-2202779 | B1 | 14 January 2021 |
| | | | | US | 10820269 | B2 | 27 October 2020 |
| | | | | US | 2020-0037245 | A1 | 30 January 2020 |
| WO | 2022-140450 | A1 | 30 June 2022 | EP | 4265028 | A1 | 25 October 2023 |
| US | 2021-0037573 | A1 | 04 February 2021 | CN | 114175811 | A | 11 March 2022 |
| | | | | EP | 4005329 | A1 | 01 June 2022 |
| | | | | KR | 10-2022-0042120 | A | 04 April 2022 |
| | | | | US | 11601981 | B2 | 07 March 2023 |
| | | | | WO | 2021-021353 | A1 | 04 February 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Physical channels and modulation. *3GPP TS 38.211*
- Multiplexing and channel coding. *3GPP TS 38.212*
- Physical layer procedures for control. *3GPP TS 38.213*
- Physical layer procedures for data. *3GPP TS 38.214*
- Physical layer measurements. *3GPP TS 38.215*
- NR and NG-RAN Overall Description. *3GPP TS 38.300*
- User Equipment (UE) procedures in idle mode and in RRC inactive state. *3GPP TS 38.304*
- Medium Access Control (MAC) protocol. *3GPP TS 38.321*
- Radio Link Control (RLC) protocol. *3GPP TS 38.322*
- Packet Data Convergence Protocol (PDCP). *3GPP TS 38.323*
- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*
- Application layer support for V2X services; Functional architecture and information flows. *3GPP TS 23.287*
- System Architecture for the 5G System. *3GPP TS 23.501*
- Procedures for the 5G System. *3GPP TS 23.502*
- Policy and Charging Control Framework for the 5G System; Stage 2. *3GPP TS 23.503*
- Non-Access-Stratum (NAS) protocol for 5G System (5GS); Stage 3. *3GPP TS 24.501*
- Access to the 3GPP 5G Core Network (5GCN) via non-3GPP access networks. *3GPP TS 24.502*
- User Equipment (UE) policies for 5G System (5GS); Stage 3. *3GPP TS 24.526*